# EUROPEAN PATENT APPLICATION

(11) **EP 4 607 650 A1**
(43) Date of publication of application: **27.08.2025**
(21) Application number: 23907251.5
(22) Date of filing: 14.06.2023
(51) Int. Cl.: H01M 10/42, G06N 3/08, G01N 21/88, G01N 21/25, G06N 3/09, G06T 7/00

(54) **SPECTRAL IMAGE-BASED BATTERY HEAT GENERATION INSPECTION METHOD AND APPARATUS SUPPORTING SAME**

(30) Priority: 19.12.2022 KR 20220178759; 19.12.2022 KR 20220178760; 19.12.2022 KR 20220178761
(71) Applicant: SK Planet Co., Ltd., Seongnam-si, Gyeonggi-do 13487 (KR)
(72) Inventor: PARK, Yeonghyeon, Cheonan-si Chungcheongnam-do 31061 (KR)
(74) Representative: Novagraaf Technologies
(86) International application number: PCT/KR2023/008203
(87) International publication number: WO 2024/135959

(57) **Abstract**

Disclosed may be a spectral image-based battery heat generation inspection method and an apparatus supporting same, the method comprising the steps of: collecting a current spectral image of a battery that is being charged or discharged; performing processing on the current spectral image; a processor, on the basis of the result of the processing, determining whether the battery is of high quality or poor quality; and outputting the result of determining whether being of high quality or poor quality.

## Description

### [Technical Field]

The present invention relates to inspection for battery heat generation.

### [Background Art]

As the demand for portable electronic devices increases, portable electronic devices of various shapes and sizes are being manufactured and sold, and a large number of portable electronic devices are being used. Such portable electronic devices use batteries or secondary batteries as power sources. In addition, the use of secondary batteries as power sources or power storage devices for electric vehicles (EVs) and hybrid electric vehicles (HEVs) is becoming a reality.

As above, much research is being conducted on secondary batteries in various fields, and in particular, research is being focused on secondary batteries that can have high energy density, high discharge voltage, and output stability. In one example, lithium secondary batteries used in electric vehicles, etc., must have the characteristics of high energy density and the ability to produce a large output in a short period of time, and must also be able to be used for more than 10 years under harsh conditions where charging and discharging by large currents are repeated in a short period of time. Therefore, safety and long-life characteristics that are far superior to those of existing small lithium secondary batteries are inevitably required.

Such secondary batteries used in electric vehicles or power storage devices are manufactured as battery packs in which multiple batteries are modularized. Multiple secondary batteries included in the battery pack are continuously and repeatedly charged or discharged by internal electrochemical reactions. Such repeated charging and discharging processes inevitably involve heat generation, and in the case of a structure in which the secondary battery is large as above, the heat generation phenomenon due to repeated charging and discharging increases. Such heat generation in the battery pack not only reduces the lifespan of the battery pack, but may also cause safety accidents such as explosions.

### [Disclosure]

### [Technical Problem]

The present invention is intended to provide a method and device capable of more accurately inspecting a battery for heat generation in a battery production process.

The present invention is intended to provide a method and device capable of more quickly and accurately performing a heat generation inspection of a battery in a battery production process with fewer resources.

The present invention is intended to provide a method and device capable of supporting the provision of high process efficiency with minimized human intervention in a battery production process.

However, the objects of the present invention are not limited to the above objects, and other objects not mentioned can be clearly understood from the description below.

### [Technical Solution]

To achieve the above objects, a battery heat generation inspection apparatus performing heat generation inspection based on a spectral image of the present invention may include a spectral camera acquiring the spectral image, a memory, and a processor functionally connected to the spectral camera and the memory. The processor may be configured to collect a current spectral image of a battery being charged or discharged, perform processing on the current spectral image, perform a good or defective product determination of the battery based on a result of the processing, and output a result of the good or defective product determination.

In an example, the processor may be configured to create multimodal data corresponding to the current spectral image by classifying the current spectral image into a plurality of predefined frequency bands, perform a good or defective product determination of a battery corresponding to the multimodal data based on the current spectral image by applying the multimodal data corresponding to the current spectral image to a reference model pre-stored in the memory and created through supervised learning, and output a result of the good or defective product determination.

Specifically, the processor may be configured to create multimodal data corresponding to the current spectral image by classifying the current spectral image into spectra of visible light band, ultraviolet band, and infrared band.

Specifically, the processor may be configured to output the determination result on a display or to a designated user terminal.

Specifically, in relation to creation of the reference model, the processor may be configured to collect a plurality of spectral images of a battery being charged or discharged, create multimodal data corresponding to the plurality of spectral images by classifying each of the plurality of spectral images into a plurality of predefined frequency bands, perform labeling of a good or defective product of a battery corresponding to the multimodal data corresponding to the plurality of spectral images, perform learning for creating the reference model by processing the multimodal data corresponding to the plurality of spectral images as input to an artificial neural network and processing the good and defective product labels as outputs of the artificial neural network, and store the learning-completed reference model in the memory.

Specifically, the processor may be configured to output at least a part of multimodal data corresponding to the plurality of spectral images to a display, receive a user input related to a good or defective product labeling of the battery, and process a good product labeling or defective product labeling of the multimodal data outputted to the display in response to the user input.

Specifically, the processor may be configured to perform clustering on the plurality of spectral images, and process a good product labeling or defective product labeling for the multimodal data corresponding to the plurality of spectral images by comparing a result of the clustering with a predefined cluster for use in the good product labeling or the defective product labeling.

Specifically, the processor may be configured to divide the multimodal data corresponding to the plurality of spectral images into a learning data set and a validation data set, perform learning of the reference model based on the learning data set, and output a performance validation value by applying the validation data set to the learning-completed reference model.

Specifically, the processor may be configured to terminate the learning of the reference model when the performance validation value is greater than or equal to a predefined specific value, and when the performance validation value is less than the predefined specific value, collect an additional spectral image, and re-perform the reference model creation based on the collected additional spectral image and the plurality of spectral images.

In an example, the processor may be configured to extract a first radiomics feature from the current spectral image, perform a good or defective product determination of a battery corresponding to the current spectral image by applying the first radiomics feature to a reference model pre-stored in the memory and created through supervised learning, and output a result of the good or defective product determination.

Specifically, the first radiomics feature may include at least one of a mean value of whole pixel values of the current spectral image, a standard deviation of the whole pixel values, an outlier rate above a threshold value, a skewness of the whole pixel values, a skewness of a pixel mean along a height axis of spectra of the current spectral image, a skewness of a pixel mean along a width axis of spectra of the current spectral image, a skewness of a pixel standard deviation along the height axis, a skewness of a pixel standard deviation along the width axis, a kurtosis of the whole pixel values, a kurtosis of a pixel mean along the height axis, a kurtosis of a pixel mean along the width axis, a kurtosis of a pixel standard deviation along the height axis, and a kurtosis of a pixel standard deviation along the width axis.

Specifically, the processor may be configured to classify a spectrum of an infrared band of the current spectral image, extract second radiomics features from the classified spectrum of the infrared band, and perform a good or defective product determination of a battery corresponding to the current spectral image by applying the second radiomics features to a reference model corresponding to the second radiomics features.

Specifically, the processor may be configured to output the determination result on a display or to a designated user terminal.

Specifically, in relation to creation of the reference model, the processor may be configured to collect a plurality of spectral images of a battery being charged or discharged, extract radiomics features from each of the plurality of spectral images, perform labeling of a good or defective product of a battery corresponding to the radiomics features corresponding to the plurality of spectral images, perform learning for creating the reference model by processing the radiomics features corresponding to the plurality of spectral images as inputs of supervised learning and processing the good and defective product labels as outputs of the supervised learning, and store the learning-completed reference model in the memory.

Specifically, the processor may be configured to output at least a part of the plurality of spectral images to a display, receive a user input related to a good or defective product labeling of the battery, and process a good product labeling or defective product labeling of the plurality of spectral images in response to the user input.

Specifically, the processor may be configured to perform clustering on the plurality of spectral images, and process a good product labeling or defective product labeling of the battery corresponding to the plurality of spectral images by comparing a result of the clustering with a predefined cluster for use in the good product labeling or the defective product labeling.

Specifically, the processor may be configured to divide the radiomics features corresponding to the plurality of spectral images into a learning data set and a validation data set, perform learning of the reference model based on the learning data set, and output a performance validation value by applying the validation data set to the learning-completed reference model.

Specifically, the processor may be configured to terminate the learning of the reference model when the performance validation value is greater than or equal to a predefined specific value, and when the performance validation value is less than the predefined specific value, collect an additional spectral image, and re-perform the reference model creation based on the collected additional spectral image and the plurality of spectral images.

Specifically, the processor may be configured to classify the current spectral image into a plurality of frequency bands, extract second radiomics features from at least some of spectra of the classified frequency bands, and perform a good or defective product determination of a battery corresponding to the current spectral image by applying the second radiomics features to a reference model corresponding to the second radiomics features.

Specifically, in relation to creation of the reference model, the processor may be configured to collect a plurality of spectral images of a battery being charged or discharged, classify each of the plurality of spectral images by predefined frequency band, and extract radiomics features from spectra classified by the frequency band, perform labeling of a good or defective product of a battery corresponding to the radiomics features by the frequency band of the plurality of spectral images, perform learning for creating the reference model by processing the radiomics features corresponding to the plurality of spectral images as inputs of supervised learning and processing the good and defective product labels as outputs of the supervised learning, and store the learning-completed reference model in the memory.

Specifically, the processor may be configured to perform clustering on the current spectral image, compare a result of the clustering with a reference model pre-stored in the memory and created by unsupervised learning, determine the battery corresponding to the current spectral image as a good product when a value of the clustering result is within a normal range designated in the reference model, as a result of the comparison, and determine the battery corresponding to the current spectral image as a defective product when the clustering result value is out of the normal range designated in the reference model.

Specifically, the processor may be configured to, in relation to the unsupervised learning, while performing unsupervised learning on data designated as a good label, set the normal range based on a mean and standard deviation of a restoration error of the data designated as the good label.

Specifically, the processor may be configured to classify the current spectral image into predefined frequency bands, perform clustering for each of the classified frequency bands, and perform a good or defective product determination of the battery by comparing each clustering result with corresponding reference models.

Specifically, the processor may be configured to classify the current spectral image into predefined frequency bands, perform clustering for an infrared band among the classified frequency bands, and perform a good or defective product determination of the battery by comparing a result of the clustering for the infrared band with a corresponding reference model.

Specifically, in relation to creation of the reference model, the processor may be configured to divide a plurality of spectral images collected in relation to a heat generation of the battery into a learning data set and a validation data set according to a predefined ratio, complete learning for the reference model by performing unsupervised learning on the learning data set, perform performance validation by applying the validation data set to the learning-completed reference model, and output a value of the performance validation.

Specifically, the processor may be configured to perform unsupervised learning by using only data designated as a good product in the learning data set.

A server device supporting battery heat generation inspection according to an embodiment of the present invention may include a server communication circuit forming a communication channel with a battery heat generation inspection apparatus, a server memory, and a server processor functionally connected to the server communication circuit and the server memory, and the server processor may be configured to receive, from the battery heat generation inspection apparatus, a current spectral image of a battery being charged or discharged, perform processing on the current spectral image, perform a good or defective product determination of the battery based on a result of the processing, and output a result of the good or defective product determination.

In an example, the server processor may be configured to create multimodal data corresponding to the current spectral image by classifying the current spectral image into a plurality of predefined frequency bands, and perform a good or defective product determination of a battery corresponding to the multimodal data based on the current spectral image by applying the multimodal data corresponding to the current spectral image to a server reference model pre-stored in the server memory and created through supervised learning.

In an example, the server processor may be configured to extract a first radiomics feature from the current spectral image, and perform a good or defective product determination of a battery corresponding to the current spectral image by applying the first radiomics feature to a reference model pre-stored in the memory and created through supervised learning.

In an example, the server processor may be configured to perform clustering on the current spectral image, compare a result of the clustering with a reference model pre-stored in the memory and created by unsupervised learning, determine the battery corresponding to the current spectral image as a good product when a value of the clustering result is within a normal range designated in the reference model, as a result of the comparison, and determine the battery corresponding to the current spectral image as a defective product when the clustering result value is out of the normal range designated in the reference model.

Specifically, in relation to creation of the reference model, the server processor may be configured to divide a plurality of spectral images collected from the battery heat generation inspection apparatus into a learning data set and a validation data set according to a predefined ratio, complete learning for the reference model by performing unsupervised learning on the learning data set, perform performance validation by applying the validation data set to the learning-completed reference model, and output a value of the performance validation to the battery heat generation inspection apparatus.

Specifically, the server processor may be configured to perform unsupervised learning by using only data designated as a good product in the learning data set.

A battery heat generation inspection method based on a spectral image according to an embodiment of the present invention may include, by a processor of the battery heat generation inspection apparatus, collecting a current spectral image of a battery being charged or discharged; by the processor, performing processing on the current spectral image; by the processor, performing a good or defective product determination of the battery based on a result of the processing; and outputting a result of the good or defective product determination.

In an example, performing the processing may include, by the processor, creating multimodal data corresponding to the current spectral image by classifying the current spectral image into a plurality of predefined frequency bands, and by the processor, performing a good or defective product determination of a battery corresponding to the multimodal data based on the current spectral image by applying the multimodal data corresponding to the current spectral image to a reference model created through supervised learning.

The method may further include creating the reference model, which includes, by the processor, collecting a plurality of spectral images of a battery being charged or discharged, by the processor, creating multimodal data corresponding to the plurality of spectral images by classifying each of the plurality of spectral images into a plurality of predefined frequency bands, by the processor, performing labeling of a good or defective product of a battery corresponding to the multimodal data corresponding to the plurality of spectral images, by the processor, performing learning for creating the reference model by processing the multimodal data corresponding to the plurality of spectral images as input to an artificial neural network and processing the good and defective product labels as outputs of the artificial neural network, and by the processor, storing the learning-completed reference model in the memory.

In an example, performing the processing may include extracting radiomics features from the current spectral image, and performing the determination may include performing a good or defective product determination of a battery corresponding to the current spectral image by applying the radiomics features of the current spectral image to a reference model created through supervised learning.

In an example, performing the processing may include performing clustering on the current spectral image, and comparing a result of the clustering with a reference model pre-stored in a memory of the battery heat generation inspection apparatus and created by unsupervised learning, and performing the determination may include determining the battery corresponding to the current spectral image as a good product when a value of the clustering result is within a normal range designated in the reference model, as a result of the comparison, and determining the battery corresponding to the current spectral image as a defective product when the clustering result value is out of the normal range designated in the reference model.

Specifically, the method may further include creating the reference model, which includes dividing a plurality of collected spectral images into a learning data set and a validation data set according to a predefined ratio, completing learning for the reference model by performing unsupervised learning on the learning data set, performing performance validation by applying the validation data set to the learning-completed reference model, and outputting a value of the performance validation.

### [Advantageous Effects]

According to the present invention, the method for inspecting the battery for abnormal heat generation and the device supporting the same can provide a threshold value for clearly distinguishing between good and defective batteries by creating a reference model based on a supervised learning artificial neural network for spectral images, and can support more efficient and accurate processing of the battery quality management function.

According to the present invention, the method for inspecting the battery for heat generation and the device supporting the same can create a reference model with less computation by using radiomics analysis and supervised learning for spectral images, and can more quickly distinguish between good and defective batteries based on the reference model, thereby supporting efficient use of resources required for system operation.

According to the present invention, the method for inspecting the battery for heat generation based on unsupervised learning and the device supporting the same can support improving process efficiency while minimizing human intervention in a battery production process and improving error occurrence.

In addition, various effects other than the effects described above can be directly or implicitly disclosed in the detailed description according to embodiments of the present invention to be described later.

### [Description of Drawings]

FIG. 1 is a diagram showing a certain example of a first system environment supporting battery heat generation inspection according to an embodiment of the present invention.
FIG. 2 is a diagram showing an example of components of a first battery heat generation inspection apparatus according to an embodiment of the present invention.
FIG. 3 is a diagram showing an example of components of a first processor in FIG. 2.
FIG. 4 is a diagram showing an example of components of a first server device according to an embodiment of the present invention.
FIG. 5 is a diagram showing an example of a reference model creation method related to battery heat generation inspection based on a spectral image according to an embodiment of the present invention.
FIG. 6 is a diagram showing an example of a battery heat generation inspection method based on a spectral image according to an embodiment of the present invention.
FIG. 7 is a diagram showing a certain example of a second system environment supporting battery heat generation inspection according to an embodiment of the present invention.
FIG. 8 is a diagram showing an example of components of a second battery heat generation inspection apparatus according to an embodiment of the present invention.
FIG. 9 is a diagram showing an example of components of a second processor in FIG. 8.
FIG. 10 is a diagram showing an example of radiomics features extracted from a spectral image according to an embodiment of the present invention.
FIG. 11 is a diagram showing an example of components of a second server device according to an embodiment of the present invention.
FIG. 12 is a diagram showing an example of a reference model creation method using radiomics features of a spectral image according to an embodiment of the present invention.
FIG. 13 is a diagram showing an example of a battery heat generation inspection method using radiomics features of a spectral image according to an embodiment of the present invention.
FIG. 14 is a diagram showing a certain example of a third system environment supporting battery heat generation inspection according to an embodiment of the present invention.
FIG. 15 is a diagram showing an example of components of a third battery heat generation inspection apparatus according to an embodiment of the present invention.
FIG. 16 is a diagram showing an example of components of a third processor in FIG. 15.
FIG. 17 is a diagram showing an example of components of a third server device according to an embodiment of the present invention.
FIG. 18 is a diagram showing an example of a reference model creation method for battery heat generation inspection according to an embodiment of the present invention.
FIG. 19 is a diagram showing an example of a battery heat generation inspection method according to an embodiment of the present invention.

### [Mode for Invention]

Now, embodiments of the present invention will be described in detail with reference to the accompanying drawings.

However, in the following description and the accompanying drawings, well known functions and components may not be described nor illustrated in detail to avoid obscuring the subject matter of the present invention. In addition, identical components are indicated with the same reference numerals as much as possible throughout the drawings

The terms or words used in the following description and drawings should not be interpreted as limited to their usual or dictionary meanings and should be interpreted as meanings and concepts that conform to the technical idea of the present invention based on the principle that the inventor can appropriately define the concept of the terms to best describe his or her invention. Therefore, embodiments described herein are only the most preferred embodiments of the present invention and do not represent all of the technical ideas of the present invention. Thus, it should be understood that there may be various equivalents and modified examples that can replace the embodiments at the time of filing this application.

In addition, terms including ordinal numbers such as first, second, etc. are used to describe various elements only for the purpose of distinguishing one element from another, and are not used to limit such elements. For example, without departing from the scope of the present invention, a second element may be named a first element, and similarly, a first element may also be named a second element.

In addition, terms used herein are only for describing specific embodiments and do not limit the present disclosure. The singular expression includes the plural expression unless the context clearly indicates otherwise. Also, the terms such as "comprise" and "include" used herein are intended to specify the presence of features, numerals, steps, operations, elements, components, or combinations thereof, which are disclosed herein, and should not be construed to exclude in advance the possibility of the presence or addition of other features, numerals, steps, operations, elements, components, or combinations thereof.

In addition, the terms such as "unit" and "module" used herein refer to a unit that processes at least one function or operation and may be implemented with hardware, software, or a combination of hardware and software. In addition, the terms "a", "an", "one", "the", and similar terms may be used as both singular and plural meanings in the context of describing the present invention (especially in the context of the following claims) unless the context clearly indicates otherwise.

In addition to the terms mentioned above, specific terms used in the following description are provided to help understanding of the present invention, and the use of such specific terms may be changed to other forms without departing from the technical meaning of the present invention.

Also, embodiments within the scope of the present invention include computer-readable media having computer-executable instructions or data structures stored on computer-readable media. Such computer-readable media can be any available media that is accessible by a general purpose or special purpose computer system. By way of example, such computer-readable media may include, but not limited to, RAM, ROM, EPROM, CD-ROM or other optical disk storage, magnetic disk storage or other magnetic storage devices, or any other physical storage medium that can be used to store or deliver certain program codes formed of computer-executable instructions, computer-readable instructions or data structures and which can be accessed by a general purpose or special purpose computer system.

Hereinafter, in the present invention, a system environment including a battery heat generation inspection apparatus capable of inspecting a battery for heat generation by using a spectral image, and the types and roles of respective components included therein will be described.

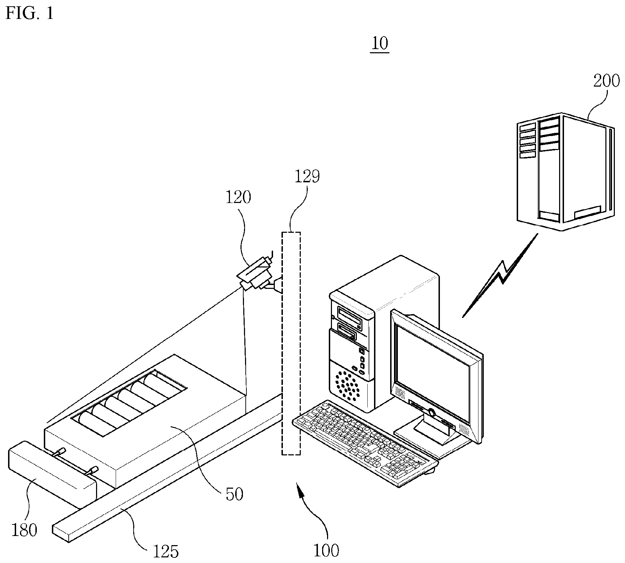

FIG. 1 is a diagram showing a certain example of a first system environment supporting battery heat generation inspection according to an embodiment of the present invention.

Referring to FIG. 1, the first system environment 10 that supports a battery heat generation inspecting function of the present invention may include components capable of performing a heat generation inspection of a first battery 50 while performing charging and discharging of the first battery 50 for quality control of the first battery 50 during a manufacturing process of the first battery 50. For example, during the manufacturing process, the first system environment 10 of the present invention may be used for the battery heat generation inspection of all the first batteries 50 or some batteries sampled from among all the first batteries 50.

The first system environment 10 may be configured to inspect heat generation while charging and discharging the first battery 50, for example, in a quality assurance (QA)/quality control (QC) process during the battery manufacturing process. To this end, the first system environment 10 may include a first battery holder 125 on which the first battery 50 can be placed, a first charging/discharging device 180 for charging/discharging the first battery 50, and a first battery heat generation inspection apparatus 100. Here, at least some of the first battery holder 125 and the first charging/discharging device 180 may be a component of the first battery heat generation inspection apparatus 100 or may be configured as an independent device separate from the first battery heat generation inspection apparatus 100. For example, the first charging/discharging device 180 only may be included in the first battery heat generation inspection apparatus 100. Additionally or alternatively, a first server device 200 that forms a communication channel with the first battery heat generation inspection apparatus 100 and supports battery heat generation inspection may be further included. Although the first system environment 10 is exemplified in a form in which a communication channel is formed between the first battery heat generation inspection apparatus 100 and the first server device 200 and the first server device 200 supports the first battery heat generation inspection apparatus 100, the present invention is not limited to this example. In another example, without the first server device 200, the first system environment 10 may be configured to perform heat generation inspection of the first battery 50 and result notification based on an electronic device (e.g., the first battery heat generation inspection apparatus 100) that can execute an embedded program. In this case, the first server device 200 may be omitted from the first system environment 10.

The first battery 50 is a secondary battery and may include an anode made of an anode active material, a cathode made of a cathode active material, a separator separating the anode and the cathode, and an electrolyte disposed between the anode and the separator or between the cathode and the separator. The first battery 50 may store power supplied from the outside (charging) and supply the stored power to the outside (discharging) according to circuit operation. The first battery 50 may generate heat during the charging and discharging process, and in some cases, such heat may be generated above a certain temperature (e.g., above 80 degrees), so that it is necessary for checking the heat generation characteristic of the first battery 50. In the present invention, the heat generation of the first battery 50 is inspected during charging and discharging of the first battery 50, so that it is possible to distinguish whether the first battery 50 is a good product or a defective product. For example, in the present invention, the first battery 50 may be placed on the first battery holder 125 in a form wrapped by a battery pack, and then charged/discharged by the first charging/discharging device 180. In this regard, the first battery holder 125 may further include wiring that connects the first charging/discharging device 180 to a power source.

The first battery heat generation inspection apparatus 100 may inspect heat generation during charging and discharging of the first battery 50 (or battery pack) manufactured completely. In this regard, the first battery heat generation inspection apparatus 100 may include the first battery holder 125 on which the first battery 50 is placed, the first charging/discharging device 180 for charging and discharging the first battery 50, a first spectral camera 120 capable of acquiring a spectral image of the first battery 50 during charging and discharging of the first battery 50, and a computing device for controlling the first charging/discharging device 180 and the first spectral camera 120. In addition, the first battery heat generation inspection apparatus 100 may further include a first mounting structure 129 for adjusting the height or direction of the first spectral camera 120. The first battery 50 may be transferred to and placed on the first battery holder 125 for quality assurance and quality control when manufacturing is completed. The first battery holder 125 includes a structure on which the first battery 50 can be placed, and may include a structure on which the first charging/discharging device 180 for charging and discharging the first battery 50 is placed. Additionally, the first battery holder 125 may include at least one of a heating device and a cooling device which are capable of controlling a charging and discharging environment of the first battery 50. Based on this, the first battery holder 125 may provide a designated temperature environment among the environments in which the first battery 50 is charged or discharged.

The first charging/discharging device 180 may perform charging/discharging of the first battery 50 placed on the first battery holder 125 under the control of the computing device. In this regard, the first charging/discharging device 180 may be configured to be connected to a permanent power source and supply power from the permanent power source to the first battery 50 or discharge power from the first battery 50. In particular, the first battery heat generation inspection apparatus 100 may capture at least one spectral image using the first spectral camera 120 while the first battery 50 is being charged or discharged, and may compare the captured spectral image with a pre-stored reference model to determine whether the first battery 50 is a good product or a defective product. In this operation, the first battery heat generation inspection apparatus 100 may acquire a certain number or more of spectral images of the charge/discharge state of the first battery 50, and create a reference model through supervised learning based on the acquired spectral images.

Additionally, the first battery heat generation inspection apparatus 100 may process a battery heat generation inspecting function for the first battery 50 through the first server device 200. In this case, the first battery heat generation inspection apparatus 100 may be configured to transmit a spectral image of the first battery 50 to the first server device 200, and then receive and output information about battery heat generation from the first server device 200. Also, the first battery heat generation inspection apparatus 100 may be configured to independently perform the battery heat generation inspecting function without separately operating the first server device 200.

The first server device 200 may establish a communication channel with the first battery heat generation inspection apparatus 100. The first server device 200 may receive at least one spectral image of the first battery 50 from the first battery heat generation inspection apparatus 100 and perform battery heat generation state detection for the at least one received spectral image. In this process, the first server device 200 may pre-store a server reference model for comparative analysis of the currently acquired spectral image. The server reference model stored in the first server device 200 may also be created through supervised learning based on the spectral images collected and provided by the first battery heat generation inspection apparatus 100. The first server device 200 may provide the analysis result of the currently acquired spectral image of the first battery 50 to the first battery heat generation inspection apparatus 100.

As described above, in the first system environment 10 that supports the battery heat generation inspecting function according to an embodiment of the present invention, the first battery heat generation inspection apparatus 100 can acquire the spectral image of the first battery 50 and compare it with the pre-stored reference model to check the battery heat generation state, thereby enabling more accurate and rapid processing of the judgment of whether the first battery 50 is a good product or a defective product.

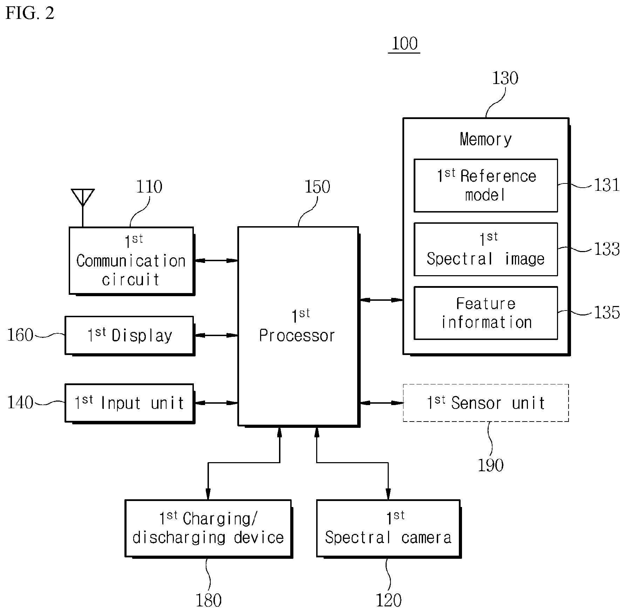

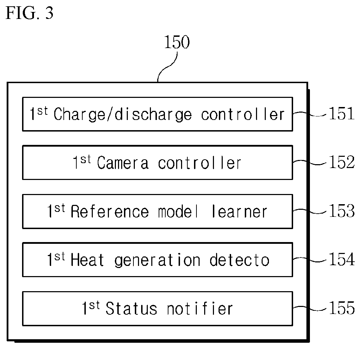

FIG. 2 is a diagram showing an example of components of a first battery heat generation inspection apparatus according to an embodiment of the present invention, and FIG. 3 is a diagram showing an example of components of a first processor in FIG. 2.

First, referring to FIG. 2, the first battery heat generation inspection apparatus 100 according to an embodiment of the present invention may include a first communication circuit 110, a first spectral camera 120, a first memory 130, a first input unit 140, a first display 160, a first charging/discharging device 180, and a first processor 150. Additionally or alternatively, the first battery heat generation inspection apparatus 100 may further include a first sensor unit 190 including at least one of a contact type sensor or a non-contact type sensor capable of collecting sensor information related to the heat generation state of the first battery 50. The first sensor unit 190 may be omitted from the first battery heat generation inspection apparatus 100, and also at least one of the first communication circuit 110, the first input unit 140, the first display 160, and the first charging/discharging device 180 may be omitted from the first battery heat generation inspection apparatus 100.

In addition, the first battery heat generation inspection apparatus 100 may further include, as described above in FIG. 1, at least one of a first mounting structure 129 capable of adjusting at least one of a shooting distance or a shooting angle between the first spectral camera 120 and the first battery 50 to capture a spectral image of the first battery 50 using the at least one first spectral camera 120, and a first battery mounting holder 125 on which the first battery 50 is placed. In addition, the first battery heat generation inspection apparatus 100 may further include a power supply (e.g., a permanent power supply or a battery) required for the operation of at least one of the above-described components, for example, the first communication circuit 110, the first spectral camera 120, the first memory 130, the first input unit 140, the first display 160, the first charging/discharging device 180, the first sensor unit 190, and the first processor 150. The power supply may also supply power to the first battery 50 through the first charging/discharging device 180.

The first communication circuit 110 may support a communication function of the first battery heat generation inspection apparatus 100. For example, the first communication circuit 110 may form a communication channel with the first server device 200. If the first server device 200 is designed to perform the calculation required for spectral image analysis on the first battery 50 according to the embodiment of the present invention, the first communication circuit 110 may transmit at least one spectral image collected by the first spectral camera 120 to the first server device 200. In addition, the first communication circuit 110 may receive the analysis result of the spectral image from the first server device 200 and transmit it to the first processor 150 according to setting or under the control of the first processor 150. Alternatively, the first communication circuit 110 may transmit the heat generation information of the first battery 50 to a designated user terminal (e.g., a terminal owned by an administrator of the first battery heat generation inspection apparatus 100). Additionally or alternatively, the first communication circuit 110 may form a communication channel with an external server device and receive a first reference model 131 from the external server device. The first reference model 131 may include a model that performs supervised learning based on a certain number or more of spectral images. In this regard, the first communication circuit 110 may form a communication channel with the external server device at a certain cycle under the control of the first processor 150, and, if there is a newly updated first reference model 131, receive the updated first reference model 131 from the external server device and store (or update) it in the first memory 130.

The first spectral camera 120, which is the first spectral camera 120 of the first battery heat generation inspection apparatus 100 described above in FIG. 1, may be disposed to capture a spectral image of the first battery 50. Although it is described in FIG. 1 that the first battery heat generation inspection apparatus 100 includes one first spectral camera 120, the present invention is not limited thereto. For example, the first spectral camera 120 may be arranged in plural numbers. In this case, a plurality of cameras may be arranged to capture images of the first battery 50 from various angles. The first spectral camera 120 may be activated under the control of the first processor 150, and upon acquiring a spectral image of the first battery 50, it may transmit the spectral image to the first processor 150. Alternatively, in response to the control of the first processor 150, the spectral image acquired by the first spectral camera 120 may be transmitted to the first server device 200 via the first communication circuit 110.

The first memory 130 may store at least one program or data required for the operation of the first battery heat generation inspection apparatus 100. For example, the first memory 130 may temporarily or semi-permanently store a control program required for operating the at least one first spectral camera 120, and the first spectral image 133 acquired through the at least one first spectral camera 120. For example, the first memory 130 may store the first reference model 131 used for comparative analysis with the currently captured spectral image for the first battery 50. The first reference model 131 may be received from an external server device as mentioned above. Alternatively, if a plurality of first spectral images 133 are accumulatively stored in a predefined amount or more, the first reference model 131 may be created through supervised learning. For supervised learning, the first spectral images 133 may be divided into a plurality of data sets (e.g., multimodal data sets). Additionally, the first memory 130 may store sensor information collected by the first sensor unit 190. The sensor information may include sensor information acquired at the same time as the time at which the first spectral image 133 is acquired or at a time close to the time at which the first spectral image 133 is acquired within a predefined range. The sensor information may be used to designate a good or defective product of the first battery 50 based on the first spectral image 133. The first memory 130 may store battery information 135. The battery information 135 may include battery identification information and information for designating a good or defective product of the first battery 50.

The first input unit 140 may include various input tools for manipulating the first battery heat generation inspection apparatus 100. For example, based on a user's manipulation, the first input unit 140 may create at least one of an input signal for requesting the execution of an application for a battery heat generation inspecting function, an input signal for activating the first spectral camera 120, an input signal for manipulating the first spectral camera 120 to acquire the first spectral image 133, and an input signal requesting the output of an analysis result of the first spectral image 133. In addition, the first input unit 140 may create an input signal for requesting the creation of the first reference model 131 using the first spectral images 133. The first input unit 140 may include at least one of various tools, such as a soft key (or an input tool based on a touch screen or touch pad), a physical key, a voice input device, a gesture input device, and a jog shuttle.

The first display 160 may output at least one screen required for the operation of the first battery heat generation inspection apparatus 100. For example, the first display 160 may output at least one of a screen indicating whether at least one device (e.g., at least one of the first spectral camera 120, the first mounting structure 129, the first communication circuit 110, the first input unit 140, the first charging/discharging device 180, and the first sensor unit 190) included in the first battery heat generation inspection apparatus 100 is in a normal state, a screen for activating the first spectral camera 120, a screen for acquiring the first spectral image 133 through the first spectral camera 120, a screen for creating the first reference model 131 based on the first spectral image 133, and a screen for detecting a battery heat generation state according to analysis of a new spectral image after learning of the first reference model 131 is completed. In addition, when the first battery heat generation inspection apparatus 100 is operated in conjunction with the first server device 200, the first display 160 may output a screen for access to the first server device 200, and a new spectral image analysis result (e.g., battery heat generation state) received from the first server device 200.

The first charging/discharging device 180 may control charging/discharging of the first battery 50 mounted on the first battery holder 125. In this regard, the first charging/discharging device 180 may be directly connected to a power source. The first charging/discharging device 180 may include a charging circuit for supplying power for charging the first battery 50 under the control of the first processor 150, and a discharging circuit for discharging the first battery 50. In order to discharge the first battery 50, the first charging/discharging device 180 may further include a load that consumes the power of the first battery 50. The first charging/discharging device 180 may detect a remaining charge amount or a discharge amount of the first battery 50.

The first sensor unit 190 may include at least one sensor capable of collecting various types of sensor information related to the first battery 50 when the first battery 50 is charged or discharged. For example, the first sensor unit 190 may include a temperature sensor capable of detecting the surface temperature of the first battery 50 when the first battery 50 is charged or discharged. Alternatively, the first sensor unit 190 may include an RGB sensor (or RGB camera) capable of detecting a change in the volume of the first battery 50 when the first battery 50 is charged or discharged.

The first processor 150 may perform at least one of the transmission and processing of signals required for the operation of the first battery heat generation inspection apparatus 100, the storage of processing results, and the output of processing results. For example, the first processor 150 may perform a process of creating the first reference model 131 based on at least one of the spectral images collected by the first spectral camera 120 or the spectral images received from an external server device. Alternatively, the first processor 150 may control the first spectral camera 120 to acquire the first spectral image 133, perform a comparative analysis with the first reference model 131 pre-stored in the first memory 130 on the acquired first spectral image 133, and output a battery heat generation state detection result according to the comparative analysis. In this regard, the first processor 150 may include components as illustrated in FIG. 3.

Referring to FIG. 3, the first processor 150 may include at least one of a first charge/discharge controller 151, a first camera controller 152, a first reference model learner 153, a first heat generation detector 154, and a first status notifier 155.

The first charge/discharge controller 151 may control the first charging/discharging device 180 to control the charging or discharging of the first battery 50. In this regard, the first charge/discharge controller 151 may check the remaining capacity of the first battery 50 when the first battery 50 placed on the first battery holder 125 is connected to the first charging/discharging device 180. In this operation, the first charge/discharge controller 151 may collect information about the first battery 50 through communication with the first battery 50. The first charge/discharge controller 151 may determine the size (e.g., voltage and current) of the charging power of the first battery 50 or the charging speed (e.g., fast charging or slow charging) based on information about the first battery 50, and control to supply the corresponding charging power to the first battery 50. When the charging of the first battery 50 starts, the first charge/discharge controller 151 may notify it to the first camera controller 152. The first charge/discharge controller 151 may complete the charging of the first battery 50 when the first battery 50 is charged up to or more than a predefined threshold value (e.g., 100% charged). Also, the first charge/discharge controller 151 may check the natural discharge amount of the first battery 50 after a predefined period of time has elapsed after the first battery 50 is fully charged, and control to perform an additional charging operation according to the natural discharge. The first charge/discharge controller 151 may control the first charging/discharging device 180 to perform a discharging operation of the first battery 50 charged up to or more than the predefined threshold value, and when the discharging operation starts, it may transmit information about this to the first camera controller 152. When discharging the first battery 50, the first charge/discharge controller 151 may control the output of the first battery 50 to have various discharge speeds by adjusting the size of the load. When the amount of load changes, information about this may be transmitted to the first reference model learner 153.

The first charge/discharge controller 151 may control the first battery holder 125 during the charging or discharging operation of the first battery 50 so that the temperature environment for charging or discharging corresponds to a predefined setting value. For example, the first charge/discharge controller 151 may control the first battery holder 125 so that the temperature environment for charging or discharging the first battery 50 is in a state of a certain sub-zero temperature value, in a state of room temperature, in a state of a certain positive temperature value, or the like. The first charge/discharge controller 151 may collect the charging speed (or the charging speed up to a specified target charging amount) or the discharging speed (or the discharging speed up to a specified target discharging amount) of the first battery 50 according to the temperature environment and the size of the charging power. Various types of information related to the charging and discharging environment of the first battery 50, such as information on the temperature environment, information on the size of the charging power, charging speed, and discharge speed, may be stored in the first memory 130 by matching with the acquired first spectral image 133 when the first spectral image 133 is acquired.

Upon receiving information about the charging or discharging operation of the first battery 50 from the first charge/discharge controller 151, the first camera controller 152 may control the first spectral camera 120 at the corresponding time to capture a spectral image of the first battery 50. The first camera controller 152 may collect a plurality of spectral images captured in various charging/discharging environments of the first battery 50 to create the first reference model 131, and store the collected images in the first memory 130. After the first reference model 131 is created or after learning is completed, the first camera controller 152 may collect at least one spectral image related to the first battery 50 to determine the current heat generation state of the first battery 50. For example, the first camera controller 152 may request the first charge/discharge controller 151 to adjust the charge/discharge temperature environment through the first battery holder 125, and collect new spectral images for each temperature environment and each charge/discharge size.

The first reference model learner 153 may perform supervised learning for creating a reference model based on the spectral images acquired under the control of the first camera controller 152 when a predetermined amount or more of spectral images are stored in the first memory 130. For example, the first reference model learner 153 may process the spectral images captured for the first battery 50 that is performing charging/discharging (or before starting charging/discharging) as input for artificial neural network learning. In this operation, based on the characteristics of the first spectral camera 120, the first reference model learner 153 may divide the measurement data into a plurality of frequency bands (e.g., ultraviolet band (e.g., wavelength band less than 400 nm), visible light band (e.g., wavelength band 400 to 700 nm), infrared band (e.g., wavelength band greater than 700 nm)) for the acquired spectral image, and perform learning by considering the divided data as multimodal data. Here, the first reference model learner 153 may divide each multimodal data according to the plurality of frequency bands into independent spectra corresponding to the indices of the height axis and the width axis, and stack the divided spectra along the channel axis to use them as inputs to the artificial neural network. When decomposing into independent spectra, it is possible to obtain a number of spectra corresponding to the product (H x W) of the height 'H' and the width 'W' of the dimension corresponding to the same channel. Additionally or alternatively, depending on the requirements of the user who manages the creation of the first reference model 131, sensor information acquired through the first sensor unit 190 may be matched with the multimodal data and stored as a multimodal data set, and data acquired from the first sensor unit 190 including at least one sensor may be time-matched by recording the time of collection together. If the sensor information collection cycle or time does not coincide with the collection time of the spectral image, the first reference model learner 153 may match data corresponding to the closest collection time based on the time recorded in each data (e.g., the spectral image and the sensor information) and store it in the first memory 130. The first reference model learner 153 may support labeling of good or defective products for at least a part of the collected multimodal data set. In this regard, the first reference model learner 153 may output at least a part of the multimodal data set (e.g., the spectral image, data obtained by dividing the spectral image into a certain frequency band, sensor information acquired at the same or similar time as the time of collecting the spectral image) to the first display 160, and define a good or defective product designation value of the multimodal data set in response to a user input. The good product designation value and defective product designation value of the multimodal data set may be used as the output value of the artificial neural network learning. If there is no user input for labeling of the multimodal data set, the first reference model learner 153 may utilize a pseudo label based on clustering for at least a part of the multimodal data set. For example, the first reference model learner 153 may compare the clustering result for the multimodal data set with a predefined specific cluster value designating a good or defective product and thereby process temporary labeling of the multimodal data set. If data 'x' (e.g., at least a part of the multimodal data set) and labels 'y' are stored in the first memory 130 more than a predefined certain quantity, the first reference model learner 153 may initialize the artificial neural network and perform supervised learning based on the stored information. The artificial neural network may be at least one or a combination of a multi-layer perceptron (MLP), a convolutional neural network (CNN), a recurrent neural network (RNN), and a graph neural network (GNN), but the present invention is not limited to the types or numbers of such artificial neural networks. Alternatively, the first reference model learner 153 may utilize a model (e.g., deep feature-based (DFB)-SVM) that combines an artificial neural network as a feature extractor and a support vector machine (SVM) as a classifier.

For a predetermined amount or more of accumulated data in the first memory 130, the first reference model learner 153 may utilize a set of some data for supervised learning and use the remaining data as a data set for validation. The split ratio of the data set for supervised learning and the data set for validation may be, for example, 8:2, and may be changed to 7:3, 9:1, etc. according to user's designation. The artificial neural network input of the first reference model learner 153 may include unimodal input or multimodal input depending on the form of the collected data. In the case of 'n' multimodal inputs, (x1, x2, x3, ..., xn) becomes a pair (or a group) of artificial neural network inputs, the artificial neural network output is a single output y, and the content of the output may be a value indicating a good or a defective product. When using multimodal input (or processing a multimodal data set as input to the artificial neural network), the first reference model learner 153 may provide each input in layers of the same level (depth). Alternatively, depending on the setting or user input, the first reference model learner 153 may input each modal data (e.g., unimodal data or at least a part of a multimodal data set) by forming a branch in the middle layer of the artificial neural network. In relation to the operation of the artificial neural network, the first reference model learner 153 may operate scratch learning, which learns from the first moment when parameters are randomly initialized, and may use a method of forming initial parameters, such as transfer learning or knowledge distillation, or use a learning technique such as fine tuning. However, the present invention is not limited thereto, and at least a part or a combination of various artificial neural networks may be used.

When learning is completed, the first reference model learner 153 may evaluate the learning-completed first reference model 131 with a divided validation data set and output the evaluation result to a system UI (e.g., a screen designated for the first display 160) so that the user can check the validation performance. The user of the first battery heat generation inspection apparatus 100 may check the validation performance of the learning-completed first reference model 131 and decide whether to operate the model. Alternatively, if the validation performance is equal to or higher than a predefined threshold value, the first reference model learner 153 may automatically apply the learning-completed first reference model 131. For example, the first reference model learner 153 may notify the completion of learning for the first reference model 131 to the first heat generation detector 154. Alternatively, if the validation performance of the first reference model 131 is below the predefined threshold value, the first reference model learner 153 may repeatedly perform additional collection of spectral images and model learning based on all spectral images including the additionally collected spectral images until the validation performance becomes equal to or higher than the threshold value.

If the learning of the first reference model 131 is completed or the learning-completed first reference model 131 is stored in the first memory 130, the first heat generation detector 154 may detect the heat generation status of the first battery 50 based on the first reference model 131. In this regard, the first heat generation detector 154 may acquire a new spectral image regarding the first battery 50 by requesting it from the first camera controller 152 and apply the acquired new spectral image to the first reference model 131 to determine the heat generation status of the first battery 50. For example, the first heat generation detector 154 may apply the new spectral image to the first reference model 131 and transmit a result value on whether the first battery 50 is a good product or a defective product to the first status notifier 155. Additionally, the first heat generation detector 154 may separate the acquired new spectral image into frequency bands, apply data for each separated frequency band to the corresponding first reference model 131, integrate applying results, and determine whether the first battery 50 is a good or defective product.

The first status notifier 155 may receive a determination value for the first battery 50 from the first heat generation detector 154 and output information corresponding to the received determination value. For example, the first status notifier 155 may output good product determination information or defective product determination information of the first battery 50 currently being charged or discharged through the first display 160 of the first battery heat generation inspection apparatus 100. Alternatively, the first status notifier 155 may transmit a message including the good or defective product determination value of the first battery 50 to a designated user terminal through the first communication circuit 110.

As described above, according to the present invention, the first battery heat generation inspection apparatus 100 of the present invention determines whether the first battery 50 is a good or defective product based on spectral images. In particular, the first battery heat generation inspection apparatus 100 classifies the spectral images by predefined frequency bands and analyzes data for each of a plurality of frequency bands by comparing it with the first reference model 131. Therefore, the first battery heat generation inspection apparatus 100 can perform more accurate determination of whether the first battery 50 is a good or defective product according to the heat generation state, and also support the improvement of the quality determination speed.

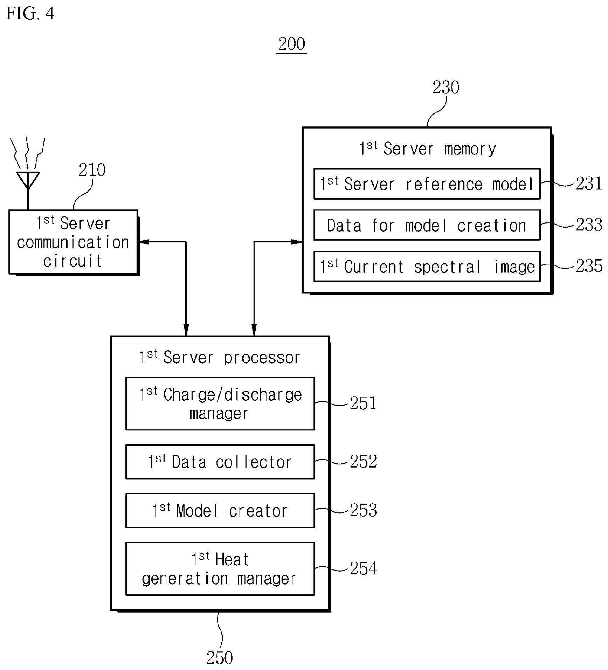

FIG. 4 is a diagram showing an example of components of a first server device according to an embodiment of the present invention. As described above, if the first battery heat generation inspection apparatus 100 is designed to independently perform the battery heat generation inspecting function according to an embodiment of the present invention, the first server device 200 may be omitted.

Referring to FIGS. 1 to 4, the first server device 200 of the present invention may include a first server communication circuit 210, a first server memory 230, and a first server processor 250.

The first server communication circuit 210 may form a communication channel with the first battery heat generation inspection apparatus 100. For example, the first server communication circuit 210 may receive a plurality of spectral images for the creation of a server reference model 231 from the first battery heat generation inspection apparatus 100 at a specified cycle or in response to a predefined event occurrence (e.g., an event of detecting a state in which the first battery 50 is placed on the first battery holder 125). In another example, the first server communication circuit 210 may receive the server reference model 231 from an external server device. The first server communication circuit 210 may receive at least one current spectral image 235 of the first battery 50 requiring heat generation inspection, and transmit the corresponding analysis result to the first battery heat generation inspection apparatus 100 (or a specified user terminal) under the control of the first server processor 250.

The first server memory 230 may store at least one program or data required for the operation of the first server device 200. For example, the first server memory 230 may store at least one of model creation data 233 corresponding to the plurality of spectral images received for the creation of the server reference model 231, the current spectral image 235 received for battery heat generation inspection, and the server reference model 231. The server reference model 231 may correspond to the first reference model 131 stored in the first memory 130 of the first battery heat generation inspection apparatus 100 described above. For example, the server reference model 231 may be created by the first battery heat generation inspection apparatus 100 and provided to the first server device 200. Alternatively, the server reference model 231 may be created by the first server processor 250 based on the model creation data 233 stored in the first server memory 230.

The first server processor 250 may control the transmission and processing of signals required for the operation of the first server device 200, storage of results, transmission of results, or transmission of messages corresponding to results. In this regard, the first server processor 250 may include a charge/discharge manager 251, a data collector 252, a model creator 253, and a heat generation manager 254.

The charge/discharge manager 251 may manage the charging/discharging of the first battery 50. In this regard, the charge/discharge manager 251 may form a communication channel with the first battery heat generation inspection apparatus 100, control the charging/discharging of the first battery 50 when the first battery 50 is placed on the first battery holder 125, and collect charge/discharge related information (e.g., at least some of the charge/discharge temperature environment of the first battery 50, the charge/discharge speed, and the size of the charge/discharge power).

The data collector 252 may receive a spectral image of the first battery 50 from the first battery heat generation inspection apparatus 100. The spectral image received from the first battery heat generation inspection apparatus 100 may include a spectral image for the creation of the server reference model or the current spectral image 235 for the inspection of the heat generation of the first battery 50. When the spectral images for the creation of the server reference model are received, the data collector 252 may store the received spectral images as the model creation data 233 in the first server memory 230. In this operation, the data collector 252 may separate the received spectral images into predefined frequency bands (e.g., ultraviolet band, visible light band, infrared band), group the spectra of each frequency band to convert them into a multimodal data format, and store at least some of the multimodal data as the model creation data 233 in the first server memory 230. Additionally or alternatively, the data collector 252 may collect sensor information at the time when the spectral images are collected, match the collected sensor information with multimodal data, and store it as a multimodal data set in the first server memory 230.

The model creator 253 may create the server reference model 231. Alternatively, the model creator 253 may create the first reference model 131 of the first battery heat generation inspection apparatus 100 and provide the created (or learning-completed) first reference model 131 to the first battery heat generation inspection apparatus 100. Meanwhile, if the server reference model 231 is pre-stored in the first server memory 230 or if the first battery heat generation inspection apparatus 100 provides the server reference model 231, the model creator 253 may be omitted. The model creator 253 may create the server reference model 231 by applying the model creation data 233 to the input and output of the artificial neural network. In this regard, the model creator 253 may process at least a part of the multimodal data set included in the model creation data 233 as the input of the artificial neural network, and process the labels for designating good and defective products for the multimodal data set as the output of the artificial neural network, thereby performing learning for the artificial neural network. In this operation, the model creator 253 may output at least a part of the data set to the first display 160 of the first battery heat generation inspection apparatus 100 for designating the labels of the data set as good or defective products, and designate the label of specific data as a good or defective product according to a user input. In another example, the model creator 253 may perform clustering for at least a part of the data set, compare the clustering result with a predefined cluster (e.g., a cluster set for designating the labels of good and defective products), and designate a pseudo-label to the corresponding data set.

The artificial neural network may be at least one of a multi-layer perceptron (MLP), a convolutional neural network (CNN), a recurrent neural network (RNN), a graph neural network (GNN), and a deep feature-based (DFB)-SVM, or a combination thereof, but the present invention is not limited thereto. In the input processing process, the model creator 253 may classify a part of the model creation data 233 into a validation data set and, after learning is completed, use it for performance validation to determine whether performance exceeds a predefined threshold value for the server reference model 231.

When the heat generation manager 254 is notified of receiving the current spectral image 235 from the data collector 252, it may perform an analysis on the current spectral image 235 stored in the first server memory 230. For example, the heat generation manager 254 may divide the current spectral image 235 by frequency bands, apply data for each band to the corresponding server reference model 231, and determine whether the first battery 50 corresponding to the current spectral image 235 is a good or defective product based on the applying result. The heat generation manager 254 may provide the determination result to at least one of the first battery heat generation inspection apparatus 100 and a designated user terminal.

As described above, the first server device 200 according to an embodiment of the present invention can operate relatively high-performance hardware compared to the first battery heat generation inspection apparatus 100, and the server reference model 231 can be configured to perform more diverse and detailed good and defective product determination compared to the first reference model 131 of the first battery heat generation inspection apparatus 100. Based on this, the first server device 200 can quickly and accurately provide a good or defective product determination result of the first battery 50.

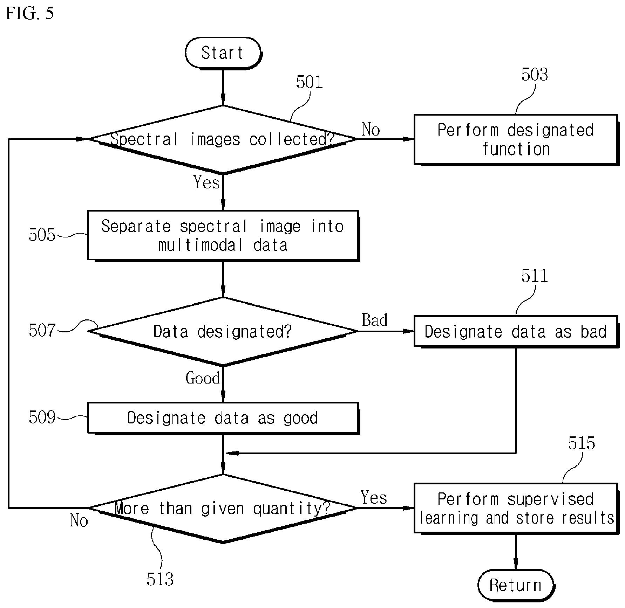

FIG. 5 is a diagram showing an example of a reference model creation method related to battery heat generation inspection based on a spectral image according to an embodiment of the present invention.

Referring to FIGS. 1 to 5, in an operating method of the first battery heat generation inspection apparatus 100 according to an embodiment of the present invention, the first processor 150 of the first battery heat generation inspection apparatus 100 may check in step 501 whether spectral images for the creation of the first reference model 131 are collected. In this regard, the first battery heat generation inspection apparatus 100 may install an application related to battery heat generation inspection and operate a reference model creation mode in the application. When the reference model creation mode is activated, the first processor 150 may operate the first spectral camera 120 to collect the spectral images of the first battery 50 placed on the first battery holder 125. Prior to this operation, when the first battery 50 is placed on the first battery holder 125, the first processor 150 may collect information about the charging/discharging environment (e.g., temperature environment) of the first battery 50 using the first sensor unit 190. The first processor 150 may control at least one of a heating device or a cooling device disposed in the first battery holder 125 so that the temperature environment becomes a predefined temperature value. If the temperature environment is within a predefined reference range, the above-described temperature control operation may be omitted.

If a request for the collection of spectral images does not occur, the first processor 150 may perform a designated function in step 503. For example, the first processor 150 may inspect the current status (e.g., normal status or occurrence of a defect) of at least some of the components of the first battery heat generation inspection apparatus 100 and output the inspection results. If there is no separate designated function, step 503 may be omitted.

When the spectral images related to the creation of the first reference model 131 are collected, the first processor 150 of the first battery heat generation inspection apparatus 100 may separate the acquired spectral image into multimodal data in step 505. For example, the first processor 150 may separate the spectral images in the form of height x width x channel (wavelength) and use them as inputs of an artificial neural network, or separate the spectral images into independent spectra corresponding to the indices of height axis and width axis and stack them along the channel axis to use them as inputs of the artificial neural network. In the case of decomposition into independent spectra, the first processor 150 may obtain a number of spectra equal to the product (H x W) of the height 'H' and the width 'W' of the same channel. Alternatively, the first processor 150 may classify the spectral images into a visible light band that can be seen by humans, an ultraviolet band having a material penetrability, and an infrared band indicating a temperature value, and consider data for each band as multimodal data. The first processor 150 may collect spectral images in multiple temperature environments for one first battery 50 and perform classification processing by frequency band for creating multimodal data for each of the multiple spectral images. Additionally or alternatively, the first processor 150 may process the multimodal data to include each unimodal data (e.g., original spectral image). In addition, the first processor 150 may match sensor information acquired at the time when the spectral image is acquired with the multimodal data and store and manage it as a multimodal data set.

In step 507, the first processor 150 of the first battery heat generation inspection apparatus 100 may determine whether data is designated for multimodal data. In this regard, the first processor 150 may output at least a part of the multimodal data to the first display 160. Alternatively, the first processor 150 may output at least a part of the spectral image related to the multimodal data or the sensor information acquired together the spectral image to the first display 160, and receive an input of a label designating a good or defective product based on the output information. If receiving a good product input, the first processor 150 may designate the corresponding multimodal data as a good product in step 509. If receiving a defective product input, the first processor 150 may designate the corresponding multimodal data as a defective product in step 511. On the other hand, in relation to labeling as good or defective, the first processor 150 may perform clustering on at least some of the spectral images without receiving a user input, compare the clustering result with a pre-stored cluster for distinguishing between good and defective products, and thereby process the designation as good or defective of multimodal data corresponding to the spectral image.

Thereafter, in step 513, the first processor 150 may check whether or not the labeled multimodal data are greater than or equal to a specified quantity. If it is less than the specified quantity, the first processor 150 may return to step 501 and re-perform the subsequent operations to collect more multimodal data.

When the data are greater than or equal to the specified quantity, in step 515, the first processor 150 may create the first reference model 131 by performing supervised learning on data (e.g., multimodal data or multimodal data set) corresponding to the stored spectral images and store the result in the first memory 130. For example, the first processor 150 may process the multimodal data as input to an artificial neural network of at least one or a combination of a multi-layer perceptron (MLP), a convolutional neural network (CNN), a recurrent neural network (RNN), a graph neural network (GNN), and a deep feature-based (DFB)-SVM, and process labels designating good and defective products as output, thereby performing model learning to create the first reference model 131. In this operation, the first processor 150 may classify some of the data stored in the first memory 130 as a validation data set, generate (learn) the first reference model 131 by performing learning using the remaining data, and then perform performance validation by applying the validation data set to the learning-completed first reference model 131. The first reference model 131 generated based on multimodal data may include models to which data can be applied for each frequency band. The first processor 150 may use a part of the data set for artificial neural network learning and use the remaining part as a validation data set. The split ratio may be 8:2 or adjusted to 7:3, 9:1, etc. in response to a user input. The data processed as input for the artificial neural network learning may include unimodal data (e.g., spectral images). In the case of n multimodal inputs, (x1, x2, x3, ..., xn) are a pair of inputs, the output is a single output y, and the content of the output may be a value indicating a good or defective product. In the case of using multimodal data as input of the artificial neural network, the first processor 150 may assign each input in layers of the same level (depth), and input the data of each modality in a middle layer of the artificial neural network by forming a branch according to setting or a user input. The artificial neural network may selectively apply at least one of scratch learning that learns from the moment when parameters are randomly initialized, transfer learning that forms initial parameters, knowledge distillation, and fine tuning learning. When learning is completed, the first processor 150 may evaluate (or performance-validate) the first reference model 131 with the validation data set, and report the validation performance by outputting the evaluation result through the system UI. Depending on a user input or whether a performance value higher than a preset threshold value is achieved, it is possible to determine whether to operate the first reference model 131 whose validation performance is reported. When supervised learning is completed, the first processor 150 may return to the heat generation inspecting function of the first battery 50. Alternatively, the first processor 150 may notify the completion of the reference model creation mode of the application and activate the heat generation inspecting function.

Meanwhile, although one example of the method for creating the first reference model 131 by the first battery heat generation inspection apparatus 100 is described in FIG. 5, the present invention is not limited thereto. For example, the process of creating the first reference model 131 may be performed in the first server device 200 and used as a method for creating the server reference model 231. Accordingly, the reference model creating method described in FIG. 5 may be at least a part of the server reference model creating method in the first server device 200.

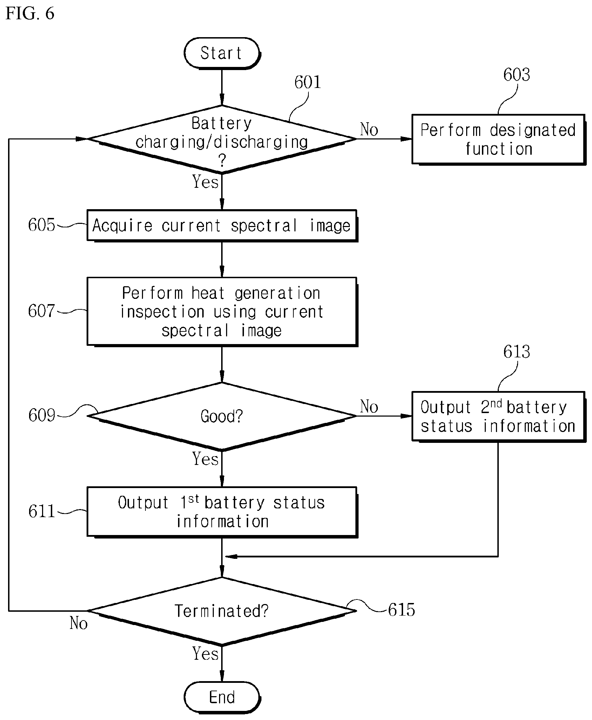

FIG. 6 is a diagram showing an example of a battery heat generation inspection method based on a spectral image according to an embodiment of the present invention.

Referring to FIGS. 1 to 6, in an operating method of the first battery heat generation inspection apparatus 100 related to the battery heat generation inspection method according to an embodiment of the present invention, for the heat generation inspection of the first battery 50, the first processor 150 may check whether battery charging/discharging is performed in step 601. Or, for the heat generation inspection of the first battery 50, the first processor 150 may detect that the first battery 50 is placed on the first battery holder 125. When the first battery 50 is placed on the first battery holder 125, the first processor 150 may perform charging/discharging of the first battery 50. If there is no battery charging/discharging event, the first processor 150 may perform a designated function in step 603. For example, the first processor 150 may output the status values of at least some of the respective components of the first battery heat generation inspection apparatus 100. If there is no separate designated function, step 503 may be omitted.

When battery charging/discharging is performed for the heat generation inspection of the first battery 50, the first processor 150 may acquire in step 605 a current spectral image for the first battery 50 being charged/discharged. In this operation, the first processor 150 may also collect temperature environment information of the first battery 50 being charged/discharged.

After acquiring the current spectral image, the first processor 150 may perform in step 607 the heat generation inspection of the first battery 50 based on the acquired spectral image. In this operation, the first processor 150 may divide the acquired current spectral image into a plurality of predefined frequency bands and apply the spectrum of each frequency band to the pre-stored first reference model 131. In this regard, the first reference model 131 may include models classified according to each frequency band spectrum and used for determining good and defective products. The first processor 150 may compare the spectra of the plurality of frequency bands with corresponding reference models and produce the result values.

In step 609, the first processor 150 may check whether the result value indicates the good product characteristics of the first battery 50. If the result value indicates the good product characteristics of the first battery 50 in the comparison with the first reference model 131, the first processor 150 may output a first battery status information in step 611. The first battery status information may include, for example, information indicating that the first battery 50 currently undergoing the heat generation inspection is a good product. The first processor 150 may output the first battery status information to the first display 160 or a designated administrator terminal.

If the result value indicates the defective product characteristics of the first battery 50 in the comparison with the first reference model 131, the first processor 150 may output a second battery status information in step 613. The second battery status information may include information indicating that the first battery 50 is a defective product. The first processor 150 may output the second battery status information to the first display 160 or a designated administrator terminal together with information that requests disposal or re-inspection of the first battery 50.

In step 615, the first processor 150 of the first battery heat generation inspection apparatus 100 may check whether to terminate the battery heat generation inspecting function. If there is no occurrence of an event related to the termination of the battery heat generation inspecting function, the first processor 150 may return to step 601 and re-perform the subsequent operations. If an event related to the termination of the battery heat generation inspecting function, such as a user input signal for terminating an application or an input signal for indicating the termination of the first spectral camera 120, occurs, the first processor 150 may determine the event as the termination of the battery heat generation inspecting function and process the termination of the related function.

Meanwhile, although the method of performing the heat generation inspection of the first battery 50 by using the first battery heat generation inspection apparatus 100 is described for example, the present invention is not limited thereto. For example, the operations described in FIG. 6 may also be similarly performed in the first server device 200. If the first server device 200 is defined to perform the operations described in FIG. 6, the first server device 200 may be configured to skip steps 601 and 603, acquire in step 605 the current spectral image from the first battery heat generation inspection apparatus 100 with a communication channel, perform the subsequent operations to determine a good or defective product for the first battery 50, and transmit the determination result to the first battery heat generation inspection apparatus 100 or a designated user terminal.

Hereinafter, in the present invention, a second system environment in which a reference model is constructed by utilizing radiomics analysis for spectral images and a battery heat generation inspecting function is supported based thereon, and the types and roles of respective components included therein will be described.

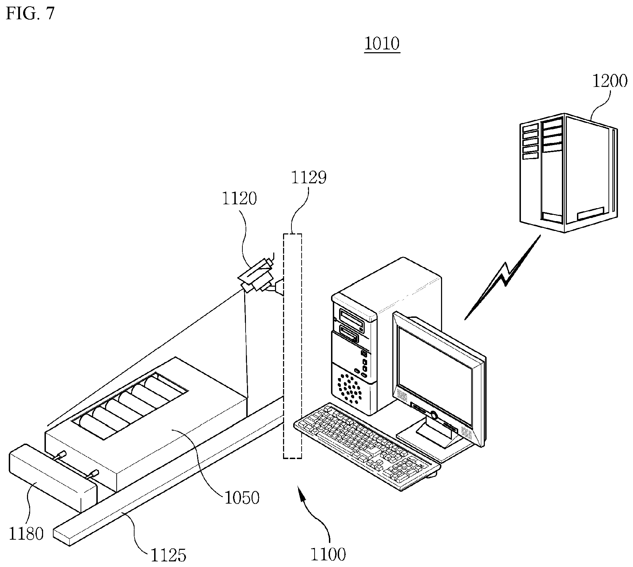

FIG. 7 is a diagram showing a certain example of a second system environment supporting battery heat generation inspection according to an embodiment of the present invention.

Referring to FIG. 7, the second system environment 1010 that supports a battery heat generation inspecting function of the present invention may include components capable of performing a heat generation inspection of a second battery 1050 while performing charging/discharging of the second battery 1050 for quality control of the second battery 1050 during a manufacturing process of the second battery 1050. For example, the second system environment 1010 of the present invention may be used to perform the heat generation inspection of all the second batteries 1050, or some batteries sampled therefrom, manufactured in the battery production process.

The second system environment 1010 may be configured to detect heat generation while charging/discharging the second battery 1050 that has been manufactured in the battery production process (or, as needed, while charging/discharging a battery capable of charging/discharging even if manufacturing is not completed) in a quality assurance (QA)/quality control (QC) process. To this end, the second system environment 1010 may include a second battery 1050 and a second battery heat generation inspection apparatus 1100.

In an example, the second battery heat generation inspection apparatus 1100 may include a second battery holder 1125 on which the second battery 1050 can be placed, and a second charging/discharging device 1180 for charging/discharging the second battery 1050. Here, at least some of the second battery holder 1125 and the second charging/discharging device 1180 may be components independent of or included in the second battery heat generation inspection apparatus 1100. In an example, only the second charging/discharging device 1180 may be included in the second battery heat generation inspection apparatus 1100.

Additionally or alternatively, the second system environment 1010 may further include a second server device 1200 that forms a communication channel with the second battery heat generation inspection apparatus 1100 and supports battery heat generation inspection. Although the second system environment 1010 is exemplified as a form in which the second server device 1200 supports the second battery heat generation inspection apparatus 1100, the present invention is not limited thereto. For example, without the second server device 1200, the second system environment 1010 may be configured to perform heat generation inspection of the second battery 1050 and result notification based on an electronic device (e.g., the second battery heat generation inspection apparatus 1100) that can execute an embedded program. In this case, the second server device 1200 may be omitted from the second system environment 1010.

The second battery 1050 is a secondary battery and may include an anode made of an anode active material, a cathode made of a cathode active material, a separator separating the anode and the cathode, and an electrolyte disposed between the anode and the separator or between the cathode and the separator. The second battery 1050 may store power supplied from the outside (charging), and supply the stored power to the outside (discharging) according to circuit operation. The second battery 1050 may generate heat during the charging and discharging process, and thus, it is necessary to inspect the heat generation characteristics of the second battery 1050. In the present invention, the heat generation of the second battery 1050 is inspected during charging and discharging of the second battery 1050, so that it is possible to distinguish whether the second battery 1050 is a good product or a defective product. In the present invention, the second battery 1050 may be placed on the second battery holder 1125 in a form wrapped by a battery pack, and then charged or discharged by the second charging/discharging device 1180. In this regard, the second battery holder 1125 may further include wiring that connects the second charging/discharging device 1180 to a power source.

The second battery heat generation inspection apparatus 1100 may inspect heat generation during charging and discharging the second battery 1050 (or battery pack) manufactured completely. In this regard, the second battery heat generation inspection apparatus 1100 may include the second battery holder 1125 on which the second battery 1050 is placed, the second charging/discharging device 1180 for charging and discharging the second battery 1050, a second spectral camera 1120 capable of acquiring a spectral image of the second battery 1050 during charging and discharging of the second battery 1050, and a computing device for controlling the second charging/discharging device 1180 and the second spectral camera 1120. In addition, the second battery heat generation inspection apparatus 1100 may further include a second mounting structure 1129 for adjusting the height or direction of the second spectral camera 1120. The second battery 1050 may be transferred to the second battery holder 1125 for quality assurance and quality control after its manufacture is completed. At this time, the second battery 1050 may be placed at a specific location of the second battery holder 1125 that can be captured by the second spectral camera 1120. The second battery holder 1125 may include a structure of temporarily fixing the second battery 1050 after the second battery 1050 is placed, and a structure on which the second charging/discharging device 1180 for supplying power for charging/discharging the second battery 1050 is placed. Additionally, the second battery holder 1125 may include at least one of a heating device and a cooling device which are capable of controlling a charging/discharging environment of the second battery 1050. Based on this, the second battery holder 1125 may operate at least one of the heating device or the cooling device under the control of a computing device so that the ambient temperature environment of the second battery 1050 can become a designated temperature environment during a charging operation or a discharging operation for heat generation inspection of the second battery 1050.

The second charging/discharging device 1180 may perform charging/discharging of the second battery 1050 placed on the second battery holder 1125 under the control of the computing device. In this regard, the second charging/discharging device 1180 may be configured to be connected to a permanent power source and supply power from the permanent power source to the second battery 1050 or discharge power from the second battery 1050. In relation to discharging the second battery 1050, the second charging/discharging device 1180 may include a load that can consume power of the second battery 1050. By operating the second charging/discharging device 1180, the second battery heat generation inspection apparatus 1100 may capture at least one spectral image using the second spectral camera 1120 during a charging operation or a discharging operation for heat generation inspection of the second battery 1050, extract radiomics features of the captured spectral image, and compare the extracted radiomics features with a pre-stored reference model to determine whether the second battery 1050 is a good product or a defective product. In relation to creating the reference model to be used for the battery heat generation inspection, the second battery heat generation inspection apparatus 1100 may perform supervised learning on the radiomics features extracted from the spectral images and thereby create the reference model. In this operation, when a certain number or more of spectral images capturing the charging or discharging status of the second battery 1050 are acquired, the second battery heat generation inspection apparatus 1100 may perform the reference model creation operation.

Additionally, the second battery heat generation inspection apparatus 1100 may process a heat generation inspecting function for the second battery 1050 through the second server device 1200. In this case, the second battery heat generation inspection apparatus 1100 may be configured to transmit a spectral image of the second battery 1050 to the second server device 1200, and then receive and output battery heat generation inspecting result from the second server device 1200. In addition, the second battery heat generation inspection apparatus 1100 may be configured to independently perform the heat generation inspecting function and a good product determination without separately operating the second server device 1200.

The second server device 1200 may establish a communication channel with the second battery heat generation inspection apparatus 1100. The second server device 1200 may receive at least one spectral image of the second battery 1050 from the second battery heat generation inspection apparatus 1100 and analyze the at least one received spectral image to detect the battery heat generation state. In this process, the second server device 1200 may pre-store a server reference model for comparative analysis of the currently acquired spectral image. The server reference model stored in the second server device 1200 may also be created through supervised learning based on radiomics features of the spectral images collected and provided by the second battery heat generation inspection apparatus 1100. The second server device 1200 may provide the analysis result of the currently acquired spectral image for the second battery 1050 to the second battery heat generation inspection apparatus 1100.

As described above, in the second system environment 1010 that supports the battery heat generation inspecting function according to an embodiment of the present invention, the second battery heat generation inspection apparatus 1100 can acquire the spectral image of the second battery 1050 and compare the radiomics features extracted from the spectral image with the reference model to identify the battery heat generation state, thereby enabling faster processing of the determination of whether the second battery 1050 is a good or defective product through fewer operations.

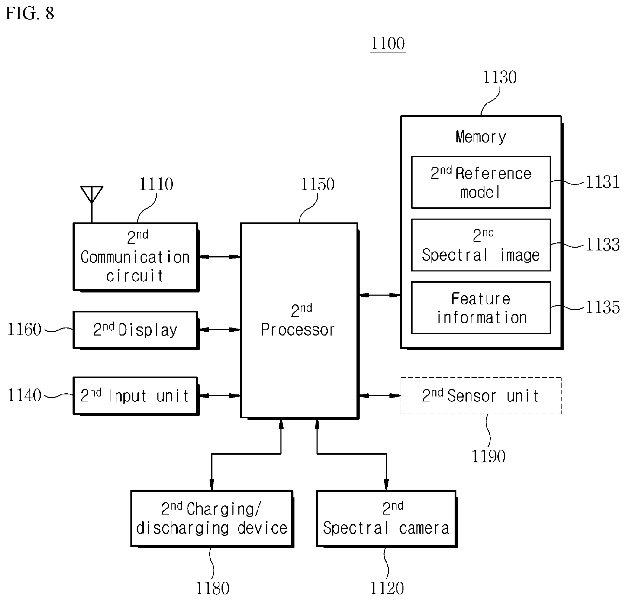

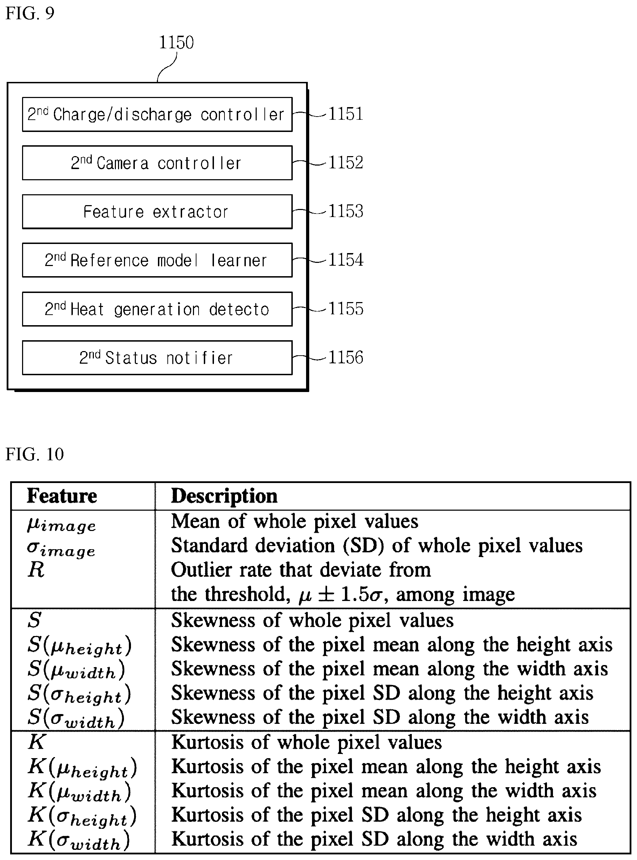

FIG. 8 is a diagram showing an example of components of a second battery heat generation inspection apparatus according to an embodiment of the present invention, and FIG. 9 is a diagram showing an example of components of a second processor in FIG. 8. FIG. 10 is a diagram showing an example of radiomics features extracted from a spectral image according to an embodiment of the present invention.

First, referring to FIG. 8, the second battery heat generation inspection apparatus 1100 according to an embodiment of the present invention may include a second communication circuit 1110, a second spectral camera 1120, a second memory 1130, a second input unit 1140, a second display 1160, a second charging/discharging device 1180, and a second processor 1150. Additionally or alternatively, the second battery heat generation inspection apparatus 1100 may further include a second sensor unit 1190 including at least one of a contact type sensor or a non-contact type sensor capable of collecting sensor information related to the heat generation state of the second battery 1050. The second sensor unit 1190 may be omitted from the second battery heat generation inspection apparatus 1100, and also at least one of the second communication circuit 1110, the second input unit 1140, the second display 1160, and the second charging/discharging device 1180 may be omitted from the second battery heat generation inspection apparatus 1100. For example, the second battery heat generation inspection apparatus 1100 may not include the second display 1160 and may be configured to transmit information regarding heat generation inspection to a designated user terminal through the second communication circuit 1110. The second charging/discharging device 1180 may be disposed as a separate component of the second system environment 1010 rather than as a component of the second battery heat generation inspection apparatus 1100 as described above.

In addition, the second battery heat generation inspection apparatus 1100 may further include, as described above in FIG. 7, at least one of a second mounting structure 1129 capable of adjusting at least one of a shooting distance or a shooting angle between the second spectral camera 1120 and the second battery 1050 to capture a spectral image of the second battery 1050 using the at least one second spectral camera 1120, and a second battery mounting holder 1125 on which the second battery 1050 is placed. In addition, the second battery heat generation inspection apparatus 1100 may further include a power supply (e.g., a permanent power supply or a battery) required for the operation of at least one of the above-described components, for example, the second communication circuit 1110, the second spectral camera 1120, the second memory 1130, the second input unit 1140, the second display 1160, the second charging/discharging device 1180, the second sensor unit 1190, and the second processor 1150. The power supply may also be a permanent power supply that supplies power to the second battery 1050 through the second charging/discharging device 1180.

The second communication circuit 1110 may support a communication function of the second battery heat generation inspection apparatus 1100. For example, the second communication circuit 1110 may form a communication channel with the second server device 1200. If the second server device 1200 is designed to perform the calculation required for spectral image analysis (e.g., radiomics feature extraction and reference model creation or comparison with the reference model) on the second battery 1050 according to an embodiment of the present invention, the second communication circuit 1110 may transmit at least one spectral image collected by the second spectral camera 1120 to the second server device 1200. In addition, the second communication circuit 1110 may receive the analysis result of the spectral image (e.g., a result of a good or defective product determination based on the heat generation state of the second battery 1050) from the second server device 1200 and transmit it to the second processor 1150 according to setting or under the control of the second processor 1150. Alternatively, the second communication circuit 1110 may transmit heat generation information of the second battery 1050 (or a result of determining whether the second battery 1050 is a good or defective product) to a designated user terminal (e.g., a terminal owned by an administrator of the second battery heat generation inspection apparatus 1100).

Additionally or alternatively, the second communication circuit 1110 may form a communication channel with an external server device and receive a second reference model 1131 from the external server device. The second reference model 1131 may include a model created by performing supervised learning on radiomics features extracted from a certain number or more of spectral images. In this regard, the second communication circuit 1110 may form a communication channel with the external server device at a certain cycle under the control of the second processor 1150, and, if there is a newly updated second reference model 1131, receive the updated second reference model 1131 from the external server device and store (or update) it in the second memory 1130.

The second spectral camera 1120, which is the second spectral camera 1120 of the second battery heat generation inspection apparatus 1100 described above in FIG. 7, may be disposed to capture a spectral image of the second battery 1050. Although it is descried in FIG. 7 that the second battery heat generation inspection apparatus 1100 includes one second spectral camera 1120, the present invention is not limited thereto. For example, the second spectral camera 1120 may be arranged in plural numbers. In this case, a plurality of spectral cameras may be arranged to capture images of the second battery 1050 from various angles or various distances. The second spectral camera 1120 may be activated under the control of the second processor 1150, and upon acquiring a spectral image of the second battery 1050, it may transmit the spectral image to the second processor 1150. Alternatively, in response to the control of the second processor 1150, the spectral image acquired by the second spectral camera 1120 may be transmitted to the second server device 1200 via the second communication circuit 1110.

The second memory 1130 may store at least one program or data required for the operation of the second battery heat generation inspection apparatus 1100. For example, the second memory 1130 may temporarily or semi-permanently store an application related to the battery heat generation inspecting function, a control program required for operating the at least one second spectral camera 1120, and the second spectral image 1133 acquired through the at least one second spectral camera 1120. For example, the second memory 1130 may store the second reference model 1131 used for comparative analysis with the currently captured spectral image for the second battery 1050. The second reference model 1131 may be received from an external server device as mentioned above. Alternatively, if a plurality of second spectral images 1133 are accumulatively stored in a predefined amount or more, the second reference model 1131 may be created through supervised learning on radiomics features extracted from the second spectral images 1133. For supervised learning, the second spectral image 1133 may be divided into a plurality of data sets (e.g., multimodal data sets). Additionally, the second memory 1130 may store sensor information collected by the second sensor unit 1190. The sensor information may include sensor information acquired at the same time as the time at which the second spectral image 1133 is acquired or at a time close to the time at which the second spectral image 1133 is acquired within a predefined range. The sensor information may be used to designate a good or defective product of the second battery 1050 based on the second spectral image 1133 or for machine learning or artificial neural network learning. The second memory 1130 may store feature information 1135. The feature information 1135 may include at least some of the radiomics features extracted from the second spectral images 1133. The second memory 1130 may store a multimodal data set obtained by matching the second spectral image 1133, the feature information 1135 corresponding to the radiomics features extracted from the second spectral image 1133, multimodal data divided into a plurality of frequency bands for the second spectral image 1133, and sensor information collected at the same time as or most similar time to the time when the second spectral image 1133 is collected. At least a part of the multimodal data set may be used as an input for supervised learning (e.g., machine learning or an artificial neural network).

The second input unit 1140 may include various input tools for manipulating the second battery heat generation inspection apparatus 1100. For example, based on a user's manipulation, the second input unit 1140 may create at least one of an input signal for requesting the execution of an application related to the heat generation inspecting function of the second battery 1050, an input signal for activating the second spectral camera 1120, an input signal for manipulating the second spectral camera 1120 to acquire the second spectral image 1133, and an input signal for requesting the output of an analysis result of the second spectral image 1133. In addition, the second input unit 1140 may create an input signal for selecting at least some radiomics features in the process of extracting the radiomics features from the second spectral images 1133, and an input signal for requesting the creation of the second reference model 1131 using at least the radiomics features. For example, the second reference model 1131 may be created based on at least a part of the multimodal data set described above, and for example, the radiomics features may be partially or fully used to create the second reference model 1131. The second input unit 1140 may include at least one of various tools, such as a soft key (or an input tool based on a touchscreen or touch pad), a physical key, a voice input device, a gesture input device, and a jog shuttle.

The second display 1160 may output at least one screen necessary for the operation of the second battery heat generation inspection apparatus 1100. For example, the second display 1160 may output at least one of an application execution screen related to the heat generation inspecting function for the second battery 1050, a screen indicating whether at least one device (e.g., at least one of the second spectral camera 1120, the second mounting structure 1129, the second communication circuit 1110, the second input unit 1140, the second charging/discharging device 1180, and the second sensor unit 1190) included in the second battery heat generation inspection apparatus 1100 is in a normal state, a screen for activating the second spectral camera 1120, a screen for acquiring the second spectral image 1133 through the second spectral camera 1120, a screen for creating the second reference model 1131 based on radiomics features extracted from the second spectral image 1133, and a screen for detecting a battery heat generation state according to analysis of a new spectral image after learning of the second reference model 1131 is completed. In addition, when the second battery heat generation inspection apparatus 1100 is operated in conjunction with the second server device 1200, the second display 1160 may output a screen for access to the second server device 1200, and a new spectral image analysis result (e.g., a result of determining whether a product is good or defective based on the battery heat generation state) received from the second server device 1200.

The second charging/discharging device 1180 may control charging/discharging of the second battery 1050 mounted on the second battery holder 1125. In this regard, the second charging/discharging device 1180 may be directly connected to a power source. The second charging/discharging device 1180 may include a charging circuit for supplying power for charging the second battery 1050 under the control of the second processor 1150, and a discharging circuit for discharging the second battery 1050. In order to discharge the second battery 1050, the second charging/discharging device 1180 may further include a load that consumes the power of the second battery 1050. The second charging/discharging device 1180 may detect a remaining charge amount or a discharge amount of the second battery 1050.

The second sensor unit 1190 may include at least one sensor capable of collecting various types of sensor information related to the second battery 1050 when the second battery 1050 is charged or discharged. For example, the second sensor unit 1190 may include a temperature sensor capable of detecting the surface temperature of the second battery 1050 when the second battery 1050 is charged or discharged. Alternatively, the second sensor unit 1190 may include an RGB sensor (or RGB camera) capable of detecting a change in the volume of the second battery 1050 when the second battery 1050 is charged or discharged.

The second processor 1150 may perform at least one of the transmission and processing of signals necessary for the operation of the second battery heat generation inspection apparatus 1100, the storage of processing results, and the output of processing results. For example, the second processor 1150 may control the execution and termination of an application related to the heat generation inspecting function for the second battery 1050, and may perform a process of creating the second reference model 1131 by at least partially or fully utilizing the radiomics features extracted from at least one of the spectral images collected by the second spectral camera 1120 or the spectral images received from an external server device.

Or, the second processor 1150 may acquire a new spectral image by controlling the second spectral camera 1120, extract radiomics features from the acquired new spectral image, perform a comparative analysis on at least some of the extracted radiomics features with the second reference model 1131 pre-stored in the second memory 1130, and output a battery heat generation state detection result according to the comparative analysis. In this regard, the second processor 1150 may include components as shown in FIG. 9.

Referring to FIG. 9, the second processor 1150 may include at least one of a second charge/discharge controller 1151, a second camera controller 1152, a feature extractor 1153, a second reference model learner 1154, a second heat generation detector 1155, and a second status notifier 1156.

The second charge/discharge controller 1151 may control the second charging/discharging device 1180 to control the charging or discharging of the second battery 1050. In this regard, the second charge/discharge controller 1151 may check the remaining capacity of the second battery 1050 when the second battery 1050 placed on the second battery holder 1125 is connected to the second charging/discharging device 1180. In this operation, the second charge/discharge controller 1151 may collect the remaining capacity information of the second battery 1050 based on at least one of communication using a connected wire or short-range wireless communication between the second charging/discharging device 1180 and the second battery 1050. The second charge/discharge controller 1151 may determine the size (e.g., voltage and current) of the charging power of the second battery 1050 and the charging speed (e.g., fast charging or slow charging) based on information about the second battery 1050, and control to supply the corresponding charging power to the second battery 1050. When the charging of the second battery 1050 starts, the second charge/discharge controller 1151 may notify it to the second camera controller 1152. The second charge/discharge controller 1151 may complete the charging of the second battery 1050 when the second battery 1050 is charged up to or more than a predefined threshold value (e.g., 100% charged). Also, the second charge/discharge controller 1151 may check the natural discharge amount of the second battery 1050 after a predefined period of time has elapsed after the second battery 1050 is fully charged, and control to perform an additional charging operation according to the natural discharge. The second charge/discharge controller 1151 may control the second charging/discharging device 1180 to perform a discharging operation of the second battery 1050 charged up to or more than the predefined threshold value, and when the discharging operation starts, it may transmit information about this to the second camera controller 1152. When discharging the second battery 1050, the second charge/discharge controller 1151 may control the output of the second battery 1050 to have various discharging speeds (e.g., fast discharging or slow discharging) by adjusting the size of the load. When the load amount changes, information about this may be transmitted to the second reference model learner 1154.

The second charge/discharge controller 1151 may control the second battery holder 1125 during the charging or discharging operation of the second battery 1050 so that the temperature environment for charging or discharging corresponds to a predefined setting value. For example, the second charge/discharge controller 1151 may control a heating device or a cooling device provided in the second battery holder 1125 so that the temperature environment for charging or discharging the second battery 1050 is in a state of a certain sub-zero temperature value, in a state of room temperature, in a state of a certain positive temperature value, or the like. The second charge/discharge controller 1151 may collect the charging speed (or the charging speed up to a specified target charging amount) or the discharge speed (or the discharge speed up to a specified target discharging amount) of the second battery 1050 according to the temperature environment and the size of the charging power. Various types of information related to the charging and discharging environment of the second battery 1050, such as information on the temperature environment, information on the size of the charging power, charging speed, and discharge speed, may be stored in the second memory 1130 by matching with the acquired second spectral image 1133 when the second spectral image 1133 is acquired.

Upon receiving information about the charging or discharging operation of the second battery 1050 from the second charge/discharge controller 1151, the second camera controller 1152 may control the second spectral camera 1120 at the corresponding time to capture a spectral image of the second battery 1050. The second camera controller 1152 may collect a plurality of spectral images captured in various charging/discharging environments of the second battery 1050 to create the second reference model 1131 and store the collected images in the second memory 1130. Or, the second camera controller 1152 may control the second spectral camera 1120 to capture a spectral image in a state where the second battery 1050 is being charged by a predefined amount or more or at a predefined charging speed or discharging speed. After the second reference model 1131 is created or after learning is completed, the second camera controller 1152 may collect at least one spectral image related to the second battery 1050 to determine the current heat generation state of the second battery 1050. For example, the second camera controller 1152 may request the second charge/discharge controller 1151 to adjust the charge/discharge temperature environment through the second battery holder 1125, and collect new spectral images for each temperature environment and each charge/discharge size.

The feature extractor 1153 may extract radiomics features from the acquired spectral image. For example, as illustrated in FIG. 10, the feature extractor 1153 may extract radiomics features including at least one of the mean value (µ_{image}) of whole pixel values of the spectral image, the standard deviation (σ_{image}) of whole pixel values, the outlier rate (R) above a threshold value, the skewness (S) of whole pixel values, the skewness of the pixel mean along the height axis (S(µ_{height})), the skewness of the pixel mean along the width axis (S(µ_{width})), the skewness of the pixel standard deviation along the height axis (S(σ_{height})), the skewness of the pixel standard deviation along the width axis (S(σ_{width})), the kurtosis (K) of whole pixel values, the kurtosis of the pixel mean along the height axis (K(µ_{height})), the kurtosis of the pixel mean along the width axis (K(µ_{width})), the kurtosis of the pixel standard deviation along the height axis (K(σ_{height})), and the kurtosis of the pixel standard deviation along the width axis (K(σ_{width})). At least some of the radiomics features extracted by the feature extractor 1153 may be stored as the feature information 1135 in the second memory 1130 for reference model learning.

The second reference model learner 1154 may perform supervised learning for creating a reference model based on at least the feature information 1135 when the spectral images acquired under the control of the second camera controller 1152 and the feature information 1135 extracted from the spectral images are stored in the second memory 1130 and the amount of the spectral images and feature information 1135 stored in the second memory 1130 exceeds a predetermined amount. For example, the second reference model learner 1154 may process the feature information 1135 extracted from the spectral images captured for the second battery 1050 that is performing charging/discharging (or before starting charging/discharging) as an input for supervised learning.

Additionally or alternatively, based on the characteristics of the second spectral camera 1120, the second reference model learner 1154 may divide the measurement data into a plurality of frequency bands (e.g., ultraviolet band (e.g., wavelength band less than 400 nm), visible light band (e.g., wavelength band 400 to 700 nm), infrared band (e.g., wavelength band greater than 700 nm)) for the acquired spectral image, regard the divided data as multimodal data, and process at least some data as an input for supervised learning (e.g., using modal data of the infrared band as a basic input and processing modal data of the remaining bands as a selective input). Here, the second reference model learner 1154 may divide each multimodal data according to the plurality of frequency bands into independent spectra corresponding to indices of the height axis and the width axis, and stack the divided spectra along the channel axis to use them as inputs for the supervised learning.

In another example, the second reference model learner 1154 may extract radiomics features for at least some modal data among the multimodal data according to the plurality of frequency bands to secure the feature information 1135, and may create the second reference model 1131 based on the feature information 1135. For example, the second reference model learner 1154 may request the feature extractor 1153 to extract feature information for a partial frequency band (e.g., an infrared band related to heat generation) in the spectral image, collect radiomics features for the partial frequency band in the spectral image, and process the collected radiomics features for the partial frequency band as input for supervised learning. In another example, not only using the radiomics features for the partial frequency bands, the second reference model learner 1154 may also process other data, such as at least some of radiomics features extracted from the entire spectral image, multimodal data that divides the frequency band of the spectral image into partial frequency bands, and sensor information (sensor information acquired at the same or similar time as the time of collecting the spectral image) as inputs for supervised learning to create the second reference model 1131.

Through the above-described operation, when the original input spectral image includes a H (height) x W (width) x C (dimensional channel) vector, the radiomics features become 13 x C in dimension by being performed for each channel, so the size of the input data for the supervised learning can be reduced to the level of 13/(HxC) compared to when the original spectral image is used. This can reduce the amount of computation and efficiently improve the resource allocation. In addition, for the accuracy of the data, the second reference model learner 1154 may selectively utilize at least a part of the multimodal data set including radiomics features for the entire frequency band as well as radiomics features for a partial frequency band of the spectral image, as mentioned above, thereby providing a trade-off function for the amount of computation and accuracy.

The second reference model learner 1154 may support designation of a good or defective label for at least a part of the collected multimodal data set. In this regard, the second reference model learner 1154 may output at least a part of the multimodal data set (e.g., a spectral image, radiomics features for all spectral image pixels extracted from the spectral image, data obtained by dividing the spectral image into certain frequency bands, radiomics features extracted from some of the divided data, sensor information acquired at a time identical or similar to the time of collecting the spectral image) to the second display 1160, and define a good or defective designation value for the multimodal data set in response to a user input. The good designation value and the defective designation value of the multimodal data set may be used as output values of supervised learning. When there is no user input for labeling of the multimodal data set, the second reference model learner 1154 may utilize pseudo labels based on clustering for at least a part of the multimodal data set. For example, the second reference model learner 1154 may process temporary labeling of the multimodal data set by comparing the clustering result of the multimodal data set with a predefined specific cluster value that designates a good or defective product. When a predefined quantity or more of data 'x' (e.g., at least a part of the multimodal data set) and label 'y' are stored in the second memory 1130, the second reference model learner 1154 may initialize a machine learning model or an artificial neural network to be used for supervised learning and perform supervised learning based on the stored information. The machine learning model may selectively use one of a decision tree (DT), a random forest (RF), an extreme gradient boosting (XGB), a light gradient boosting machine (LGBM), a support vector machine (SVM), or a k-nearest neighbor classifier (KNN), may learn a plurality of specific models, or build an ensemble model in the form of combining multiple models. The artificial neural network may be at least one or a combination of a multi-layer perceptron (MLP), a convolutional neural network (CNN), a recurrent neural network (RNN), and a graph neural network (GNN), but the present invention is not limited to the types or numbers of such artificial neural networks. Alternatively, the second reference model learner 1154 may utilize a model (e.g., deep feature-based (DFB)-SVM) that combines an artificial neural network as a feature extractor and a support vector machine (SVM) as a classifier.

For all accumulated data (e.g., the entire multimodal data set described above) greater than a predetermined amount in the second memory 1130, the second reference model learner 1154 may utilize only a part of the data set in the supervised learning process and use the remaining part of the data set as a validation data set. The split ratio of the data set for supervised learning and the data set for validation may be, for example, 8:2, and may be changed to 7:3, 9:1, etc. according to user's designation. When learning is completed, the second reference model learner 1154 may evaluate the learning-completed second reference model 1131 using the validation data set and output the evaluation result to a system UI (e.g., a screen designated on the second display 1160) so that the user may check the validation performance. The user of the second battery heat generation inspection apparatus 1100 may check the validation performance of the learning-completed second reference model 1131 and decide whether to operate the model. Alternatively, if the validation performance is equal to or higher than a predefined threshold value, the second reference model learner 1154 may automatically apply the learning-completed second reference model 1131. For example, the second reference model learner 1154 may notify the completion of learning for the second reference model 1131 to the second heat generation detector 1155. Alternatively, if the validation performance of the second reference model 1131 is lower than the predefined threshold value, the second reference model learner 1154 may repeatedly perform additional collection of spectral images and model learning based on all spectral images including the additionally collected spectral images until the validation performance becomes equal to or higher than the threshold value.

If the learning of the second reference model 1131 is completed or the learning-completed second reference model 1131 is stored in the second memory 1130, the second heat detector 1155 may detect the heat generation status of the second battery 1050 based on the second reference model 1131. In this regard, the second heat detector 1155 may acquire a new spectral image regarding the second battery 1050 by requesting it from the second camera controller 1152, request the feature extractor 1153 to extract radiomics features of the new spectral image, and determine the heat generation status of the second battery 1050 by applying the extracted radiomics features to at least the second reference model 1131. For example, the second heat generation detector 1155 may apply the radiomics features of the new spectral image to the second reference model 113 and transmit the result value of whether the second battery 1050 is good or defective to the second status notifier 1156. Additionally, the second heat generation detector 1155 may separate the acquired new spectral image into frequency bands, apply the radiomics features for at least some of the frequency band-specific data among the separated frequency band-specific data to the corresponding second reference model 1131, and determine whether the second battery 1050 is a good or defective product by using applying results alone or in combination. Additionally, the second reference model 1131 may be created based on all or some of the multimodal data set described above (e.g., a spectral image captured during charging or discharging of the second battery 1050, radiomics features for all spectral image pixels extracted from the spectral image, data obtained by dividing the spectral image into certain frequency bands, radiomics features extracted from at least some of the divided data, sensor information acquired at the same or similar time as the time of collecting the spectral image). The second heat generation detector 1155 may determine whether a product is good or defective by applying, to the second reference model 1131, at least some of the newly acquired spectral image, radiomics features for all spectral image pixels extracted from the new spectral image, data obtained by dividing the new spectral image into certain frequency bands, radiomics features extracted from at least some of the data of the divided data of the new spectral image, and sensor information acquired at the same or similar time as the time of collecting the new spectral image, according to a user input or a predefined setting.

The second status notifier 1156 may receive a determination value of the second battery 1050 from the second heat generation detector 1155 and output information corresponding to the received determination value. For example, the second status notifier 1156 may output good product determination information or defective product determination information of the second battery 1050 currently being charged or discharged through the second display 1160 of the second battery heat generation inspection apparatus 1100. Alternatively, the second status notifier 1156 may transmit a message including the good or defective product determination value of the second battery 1050 to a designated user terminal through the second communication circuit 1110.

As described above, according to the present invention, the second battery heat generation inspection apparatus 1100 of the present invention determines whether the second battery 1050 is a good or defective product based on spectral images. In particular, the second battery heat generation inspection apparatus 1100 analyzes at least radiomics features for the spectral image (or radiomics features extracted from at least some of the predefined frequency band-specific data for the spectral image) by comparing them with the second reference model 1131, thereby performing the determination of whether the second battery 1050 is a good or defective product according to the heat generation state with a smaller amount of computation. Or, the second battery heat generation inspection apparatus 1100 of the present invention may utilize the entire multimodal data set in a situation where a detailed determination of whether the second battery is a good or defective product is required, as needed or at the request of a user. As such, the second battery heat generation inspection apparatus 1100 of the present invention may selectively perform the determination for the state of the second battery 1050 depending on the situation, thereby supporting more flexible operation of the production process for the second battery 1050.

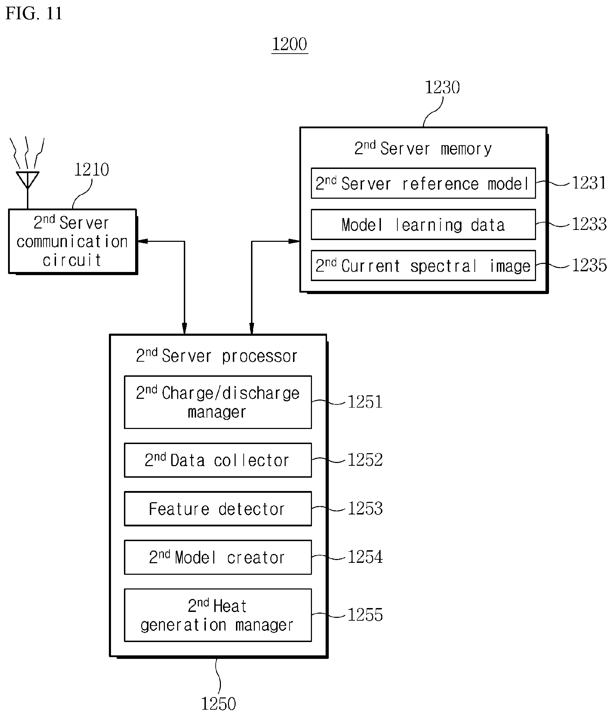

FIG. 11 is a diagram showing an example of components of a second server device according to an embodiment of the present invention. As described above, if the second battery heat generation inspection apparatus 1100 is designed to independently perform the battery heat generation inspecting function according to an embodiment of the present invention, the second server device 1200 may be omitted.

Referring to FIGS. 7 to 11, the second server device 1200 of the present invention may include a second server communication circuit 1210, a second server memory 1230, and a second server processor 1250.

The second server communication circuit 1210 may form a communication channel with the second battery heat generation inspection apparatus 1100. For example, the second server communication circuit 1210 may receive a plurality of spectral images for the creation of a second server reference model 1231 from the second battery heat generation inspection apparatus 1100 at a specified cycle or in response to a predefined event occurrence (e.g., an event of detecting a state in which the second battery 1050 is placed on the second battery holder 1125). In another example, the second server communication circuit 1210 may receive the second server reference model 1231 from an external server device. The second server communication circuit 1210 may receive at least one second current spectral image 1235 of the second battery 1050 requiring heat generation inspection, and transmit the corresponding analysis result to the second battery heat generation inspection apparatus 1100 (or a designated user terminal) under the control of the second server processor 1250.

The second server memory 1230 may store at least one program or data required for the operation of the second server device 1200. For example, the second server memory 1230 may store at least one of model learning data 1233 corresponding to a plurality of spectral images received for the creation of the second server reference model 1231, a second current spectral image 1235 received for battery heat generation inspection, and the second server reference model 1231. The second server reference model 1231 may correspond to the second reference model 1131 stored in the second memory 1130 of the second battery heat generation inspection apparatus 1100 described above. In an example, the second server reference model 1231 may be created by the second battery heat generation inspection apparatus 1100 and provided to the second server device 1200. Alternatively, the second server reference model 1231 may be created by the second server processor 1250 based on the model learning data 1233 stored in the second server memory 1230. The model learning data 1233 may include at least some of a plurality of spectral images provided by the second battery heat generation inspection apparatus 1100, radiomics features extracted from each of the plurality of spectral images, data by band (or multimodal data) in which each of the plurality of spectral images is divided by predefined frequency bands, radiomics features extracted from at least some band data among the frequency band data of each spectral image, and sensor information acquired at the same time as or closest time to the time of collecting the plurality of spectral images. In an example, the model learning data 1233 of the present invention may necessarily include first radiomics feature groups extracted from each of the plurality of spectral images or second radiomics feature groups extracted from at least some band data among frequency band data of each spectral image, and at least some data among the remaining data may be added to the model learning data 1233 according to a user request or a predefined policy of the second server device 1200.

The second server processor 1250 may control the transmission and processing of signals required for the operation of the second server device 1200, storage of results, transmission of results, or transmission of messages corresponding to results. In this regard, the second server processor 1250 may include a second charge/discharge manager 1251, a second data collector 1252, a feature detector 1253, a second model creator 1254, and a second heat generation manager 1255.

The second charge/discharge manager 1251 may manage the charging/discharging of the second battery 1050. In this regard, the second charge/discharge manager 1251 may form a communication channel with the second battery heat generation inspection apparatus 1100, control the charging/discharging of the second battery 1050 according to a predefined plan when the second battery 1050 is placed on the second battery holder 1125, and collect charge/discharge related information (e.g., at least some of the charge/discharge temperature environment of the second battery 1050, the charge/discharge speed, and the size of the charge/discharge power).

The second data collector 1252 may receive a spectral image of the second battery 1050 from the second battery heat generation inspection apparatus 1100. The spectral image received from the second battery heat generation inspection apparatus 1100 may include spectral images for the creation of the second server reference model 1231 or the second current spectral image 1235 for the inspection of the heat generation of the second battery 1050. When the spectral images for the creation of the second server reference model 1231 are received, the second data collector 1252 may store the received spectral images as at least a part of the model learning data 1233 in the second server memory 1230. In this operation, the second data collector 1252 may separate the received spectral images into predefined frequency bands (e.g., ultraviolet band, visible light band, infrared band), group the spectra of each frequency band in the form of multimodal data, and store them as the model learning data 1233 in the second server memory 1230. Additionally or alternatively, the second data collector 1252 may collect sensor information at the time when the spectral images are collected, match the collected sensor information with the multimodal data, and store it as a multimodal data set in the second server memory 1230. Additionally or alternatively, the second data collector 1252 may provide at least some of the received spectral images or the multimodal data classified into the spectra of each frequency band to the feature detector 1253.

The feature detector 1253 may extract first radiomics features for each of the received spectral images. For example, in case of classifying a plurality of radiomics features (e.g., 13 when referring to FIG. 10) extracted from one spectral image into one group, the feature detector 1253 may detect first radiomics feature groups respectively corresponding to the plurality of spectral images. In another example, the feature detector 1253 may extract radiomics features for spectra classified by frequency band. For example, in case of classifying one spectral image by a plurality of frequency bands, extracting radiomics features from at least some of the spectra of the plurality of frequency bands, and classifying the extracted radiomics features into one group, the feature detector 1253 may detect second radiomics feature groups extracted from at least some of the spectra of the plurality of frequency bands respectively corresponding to the plurality of spectral images. The feature detector 1253 may store at least some of the first radiomics feature groups or the second radiomics feature groups in the second server memory 1230 as at least some of the model learning data 1233 (or multimodal data set).

The second model creator 1254 may create the second server reference model 1231. Alternatively, the second model creator 1254 may create the second server reference model 1231 at the request of the second battery heat generation inspection apparatus 1100 and provide the created second server reference model 1231 to the second battery heat generation inspection apparatus 1100 as the second reference model 1131 to be used by the second battery heat generation inspection apparatus 1100. Meanwhile, if the second server reference model 1231 is pre-stored in the second server memory 1230 or if the second battery heat generation inspection apparatus 1100 provides the second server reference model 1231, the second model creator 1254 may be omitted. The second model creator 1254 may create the second server reference model 1231 by applying the model learning data 1233 to the input and output of supervised learning (or machine learning or artificial neural network). In this regard, the second model creator 1254 may perform a labeling operation for designating good and defective products for the multimodal data set included in the model learning data 1233. The label designation may be determined according to a user input of the second battery heat generation inspection apparatus 1100. Alternatively, the label designation may be performed automatically by comparing the clustering result for at least a part of the multimodal data set with a predefined cluster for designating a good or defective product. The second model creator 1254 may use a traditional machine learning model or an artificial neural network for at least a part of the multimodal data set. In case of using a traditional machine learning model, the second model creator 1254 may selectively use one of a decision tree (DT), a random forest (RF), an extreme gradient boosting (XGB), a light gradient boosting machine (LGBM), and a support vector machine (SVM), a k-nearest neighbor classifier (KNN), may learn a plurality of specific models, or build an ensemble model in the form of combining multiple models. In case of using an artificial neural network, the second model creator 1254 may use one or more of a multi-layer perceptron (MLP), a convolutional neural network (CNN), a recurrent neural network (RNN), a graph neural network (GNN), and a deep feature-based (DFB)-SVM (a form that utilizes an artificial neural network as a feature extractor and an SVM as a classifier). Additionally or alternatively, in the input processing process of supervised learning, the second model creator 1254 may classify a part of the model learning data 1233 into a validation data set and, after learning is completed, use it for performance validation to determine whether performance exceeds a predefined threshold value for the second server reference model 1231.

When the second heat generation manager 1255 is notified of receiving the second current spectral image 1235 from the second data collector 1252, it may perform an analysis on the second current spectral image 1235 stored in the second server memory 1230. For example, the second heat generation manager 1255 may extract first radiomics features from the second current spectral image 1235, apply them to the second server reference model 1231, and perform a good or defective product determination of the second battery 1050 corresponding to the second current spectral image 1235 based on the applying result. The second heat generation manager 1255 may provide the determination result to at least one of the second battery heat generation inspection apparatus **1100** and a designated user terminal. Or, the second heat generation manager 1255 may perform spectrum classification by frequency band for the second current spectral image 1235, extract second radiomics features from the spectra of some frequency bands (e.g., infrared band), and apply them to a corresponding server reference model to determine whether the second battery 1050 corresponding to the second current spectral image 1235 is a good or defective product. The second server reference model 1231 applying the first radiomics features may be different from the server reference model applying the second radiomics features. Or, the second server reference model 1231 (or the second reference model 1131) of the present invention may be configured to apply the entire multimodal data set or may be configured to apply only specific data. Or, for improving the accuracy of determining whether the second battery 1050 is good or defective, as needed, the model creation may be performed so that all types of multimodal data sets described above (e.g., a spectral image captured during charging or discharging of the second battery 1050, radiomics features for all spectral image pixels extracted from a spectral image, data obtained by dividing the spectral image by certain frequency bands, radiomics features extracted from at least some of the divided data, and sensor information acquired at a time identical or similar to the time of collecting the spectral image) may be applied.

As described above, the second server device 1200 according to an embodiment of the present invention can support adaptive system applying depending on the environment in which battery heat generation can be inspected through a trade-off between speed and accuracy.

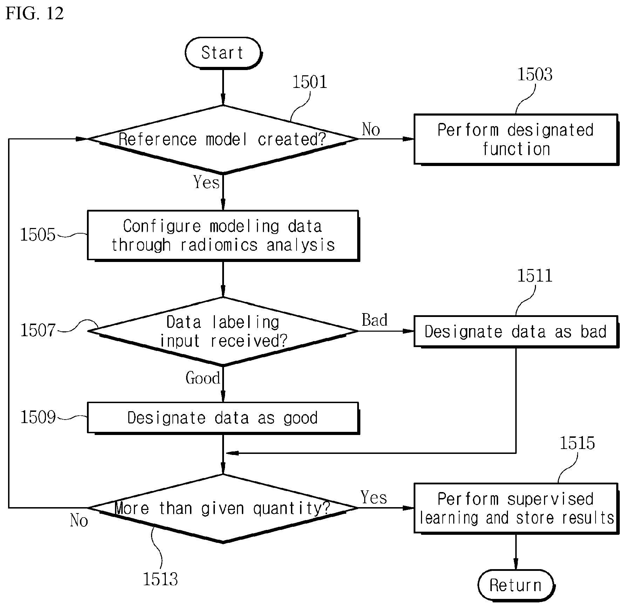

FIG. 12 is a diagram showing an example of a reference model creation method using radiomics features of a spectral image according to an embodiment of the present invention.

Referring to FIGS. 7 to 12, in an operating method of the second battery heat generation inspection apparatus 1100 according to an embodiment of the present invention, the second processor 1150 of the second battery heat generation inspection apparatus 1100 may check in step 1501 whether a request for creating the second reference model 1131 occurs. In this regard, the second processor 1150 of the second battery heat generation inspection apparatus 1100 may install an application related to battery heat generation inspection and, if there is no second reference model 1131 that the application can operate, automatically operate a reference model creation mode. Or, the second processor 1150 may identify the version of the second reference model 1131 and, if an update is required, operate the reference model creation mode. Or, the second processor 1150 may collect identification information of the second battery 1050 to perform heat generation inspection, and if there is no reference model corresponding to the second battery 1050 corresponding to the identification information, the second processor 1150 may enter the reference model creation mode. When the mode is activated in response to a reference model creation request, the second processor 1150 may operate the second spectral camera 1120 to collect spectral images of the second battery 1050 placed on the second battery holder 1125. Prior to this operation, the second processor 1150 may collect information on the charging/discharging environment (e.g., temperature environment) of the second battery 1050 by using the second sensor unit 1190 when the second battery 1050 is placed on the second battery holder 1125. The second processor 1150 may control at least one of a heating device or a cooling device disposed in the second battery holder 1125 so that the temperature environment becomes a predefined temperature value. Or, if the temperature environment is within a predefined reference range, the above-mentioned temperature control operation may be omitted.

If the creation of a reference model is not required, the second processor 1150 may perform a designated function in step 1503. For example, if the second reference model 1131 has already been stored in the second memory 1130, the second processor 1150 may perform an operation related to a heat generation inspecting function for the second battery 1050. Or, the second processor 1150 may inspect the current status (e.g., normal status or occurrence of a defect) of at least some of the components of the second battery heat generation inspection apparatus 1100 and output the inspection result. If there is no separate designated function, step 1503 may be omitted.

When a spectral image related to the creation of the second reference model 1131 is collected, in step 1505, the second processor 1150 of the second battery heat generation inspection apparatus 1100 may configure modeling data (e.g., data including at least the feature information 1135 described in FIG. 2, data including at least a part of the model learning data 1233 described in FIG. 11, or at least a part of a multimodal data set) through radiomics analysis from the acquired spectral image. For example, the second processor 1150 may extract the radiomics features described in FIG. 10 above from the collected spectral image. Or, the second processor 1150 may classify the collected spectral images into a plurality of predefined frequency bands and collect partial radiomics features from spectra of at least some of the frequency bands (e.g., spectra of the infrared band). In case of collecting radiomics features of the entire frequency band, the second processor 1150 may classify and group them by frequency band. Additionally or alternatively, the second processor 1150 may secure sensor information collected at the same (or closest) time as the time of collecting the spectral image, configure a multimodal data set together with the sensor information and the above-described data (e.g., the spectral image, first radiomics features extracted from the spectral image, and second radiomics features extracted from spectra classified by frequency band of the spectral image), and store the multimodal data set as modeling data in the second memory 1130. Additionally or alternatively, the second processor 1150 may collect spectral images in multiple temperature environments for one second battery 1050, and extract at least some of the radiomics features from the multiple spectral images, or extract partial radiomics features from multimodal data classified and processed by frequency band.

In step 1507, the second processor 1150 of the second battery heat generation inspection apparatus 1100 may check whether a data labeling input for modeling data including at least feature information is received. In this regard, the second processor 1150 may output at least a part of the modeling data to the second display 1160. Or, the second processor 1150 may output a spectral image related to the modeling data or at least a part of sensor information acquired together when acquiring the spectral image to the second display 1160, and receive an input (e.g., user input) of a label designating a good or defective product in response to the output information.

Upon receiving a good product input, the second processor 1150 may designate the corresponding modeling data as a good product in step 1509. Upon receiving a defective product input, the second processor 1150 may designate the corresponding modeling data as a defective product in step 1511. Meanwhile, in relation to designating a good or defective product labeling, the second processor 1150 may perform clustering on at least some of spectral images without receiving a user input, compare the clustering result with a pre-stored cluster for distinguishing between good and defective products, and thereby designate the modeling data corresponding to the spectral image as a good or defective product.

Thereafter, in step 1513, the second processor 1150 may check whether or not the labeled modeling data are greater than or equal to a specified quantity. If it is less than the specified quantity, the second processor 1150 may return to step 1501 and re-performs the subsequent operations to collect more modeling data.

When the data are greater than or equal to the specified quantity, in step 1515, the second processor 1150 may create the second reference model 1131 by performing supervised learning on data (e.g., modeling data or multimodal data set) corresponding to the stored spectral images and store the result in the second memory 1130. For example, the second processor 1150 may create the second reference model 1131 by processing the above-described designated label value (e.g., a value designating a good product or a defective product) as output for at least one of a machine learning model or an artificial neural network, processing the remainder as input, and then performing model learning. In this operation, the second processor 1150 may classify some of the data (e.g., at least a part of the modeling data or the multimodal data set) stored in the second memory 1130 as a validation data set, perform learning using the remaining data, and then, when learning for the second reference model 1131 is completed, perform performance validation by applying the validation data set to the learning-completed second reference model 1131. In an example, the second processor 1150 may split the data set used for supervised learning and the validation data set in a ratio of 8:2, or adjust to 7:3, 9:1, etc. in response to a user input. The second processor 1150 may output the performance validation result through the system UI and report the validation performance to a designated user. Depending on a user input or whether a performance value higher than a preset threshold value is achieved, it is possible to determine whether to operate the second reference model 1131 whose validation performance is reported. When supervised learning is completed, the second processor 1150 may return to the heat generation inspecting function of the second battery 1050. Alternatively, the second processor 1150 may notify the completion of the reference model creation mode of the application and activate the heat generation inspecting function.

Meanwhile, although one example of the method for creating the second reference model 1131 by the second battery heat generation inspection apparatus 1100 is described in FIG. 12, the present invention is not limited thereto. For example, at least a part of the process of creating the second reference model 1131 may be performed in the second server device 1200. Accordingly, the reference model creation method described in FIG. 12 may be at least a part of the server reference model creation method in the second server device 1200.

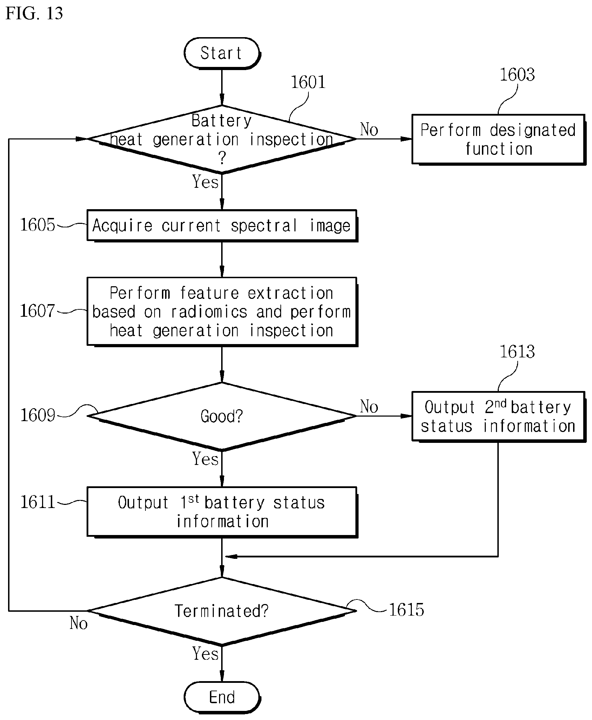

FIG. 13 is a diagram showing an example of a battery heat generation inspection method using radiomics features of a spectral image according to an embodiment of the present invention.

Referring to FIGS. 7 to 13, in an operating method of the second battery heat generation inspection apparatus 1100 related to the battery heat generation inspection method according to an embodiment of the present invention, the second processor 1150 may check in step 1601 whether a request for heat generation inspection of the second battery 1050 occurs. In this regard, the second processor 1150 may activate an application in response to a user input or according to predefined schedule information, and check whether a user input for selecting the heat generation inspecting function of the second battery 1050 among the corresponding application support functions occurs. If no input for requesting the battery heat generation inspection is received, the second processor 1150 may perform a designated function in step 1603. For example, the second processor 1150 may output the status values of at least some of the respective components of the second battery heat generation inspection apparatus 1100. If there is no separate designated function, step 1603 may be omitted. When an input for requesting the battery heat generation inspection occurs, the second processor 1150 may detect that the second battery 1050 is placed on the second battery holder 1125 for inspecting the heat generation of the second battery 1050. When the second battery 1050 is placed on the second battery holder 1125, the second processor 1150 may control charging/discharging of the second battery 1050.

When battery charging/discharging is performed for the heat generation inspection of the second battery 1050 or when a predefined condition (e.g., the charge or discharge amount of the second battery 1050 is greater than or less than a specified value, or the charge speed or discharge speed is greater than or equal to a specified reference value), the second processor 1150 may acquire in step 1605 a current spectral image of the second battery 1050 being charged/discharged. In this operation, the second processor 1150 may also collect temperature environment information of the second battery 1050 being charged/discharged. When the temperature environment is out of a predefined reference range, heating device adjustment or cooling device adjustment may be performed to control the temperature environment.

After the current spectral image is acquired, in step 1607, the second processor 1150 may extract radiomics features (e.g., at least some of the radiomics features described in FIG. 10 above) from the acquired spectral image, and perform a heat generation inspection of the second battery 1050 using the extracted features. In this operation, the second processor 1150 may divide the acquired current spectral image into a plurality of predefined frequency bands, extract partial radiomics features from the spectrum of each frequency band, and compare the extracted partial radiomics features with the pre-stored second reference model 1131. In this regard, the second reference model 1131 may include models related to the radiomics features extracted from the spectra of the plurality of frequency bands. The second processor 1150 may compare the spectra of the plurality of frequency bands with the corresponding reference model and calculate a result value.

In step 1609, the second processor 1150 may check whether the result value of the heat generation inspection of the second battery 1050 indicates the good product characteristics of the second battery 1050. If the result value in the comparison with the second reference model 1131 indicates the good product characteristics of the second battery 1050, the second processor 1150 may output a first battery status information in step 1611. The first battery status information may include, for example, information indicating that the second battery 1050 currently undergoing the heat generation inspection is a good product. The second processor 1150 may output the first battery status information to the second display 1160 or a designated administrator terminal.

If the result value in the comparison with the second reference model 1131 indicates the defective product characteristics of the second battery 1050, the second processor 1150 may output a second battery status information in step 1613. The second battery status information may include information indicating that the second battery 1050 is a defective product. The second processor 1150 may output the second battery status information to the second display 1160 or a designated administrator terminal together with information that requests disposal or re-inspection of the second battery 1050.

In step 1615, the second processor 1150 of the second battery heat generation inspection apparatus 1100 may check whether to terminate the battery heat generation inspecting function. If there is no occurrence of an event related to the termination of the battery heat generation inspecting function, the second processor 1150 may return to step 1601 and re-perform the subsequent operations. If an event related to the termination of the battery heat generation inspecting function, such as a user input signal for terminating an application or an input signal for indicating the termination of the second spectral camera 1120, occurs, the second processor 1150 may determine the event as the termination of the battery heat generation inspecting function and process the termination of the related function.

Meanwhile, although the method of performing the heat generation inspection of the second battery 1050 by using the second battery heat generation inspection apparatus 1100 is described for example, the present invention is not limited thereto. For example, the operations described in FIG. 13 may also be similarly performed in the second server device 1200. If the second server device 1200 is defined to perform the operations described in FIG. 13, the second server device 1200 may be configured to skip steps 1601 and 1603, acquire in step 1605 the current spectral image from the second battery heat generation inspection apparatus 1100 with a communication channel, perform the subsequent operations to determine a good or defective product for the second battery 1050, and transmit the determination result to the second battery heat generation inspection apparatus 1100 or a designated user terminal.

Hereinafter, in the present invention, a system environment for supporting a battery heat generation inspecting function based on unsupervised learning for spectral images and the types and roles of respective components included therein will be described.

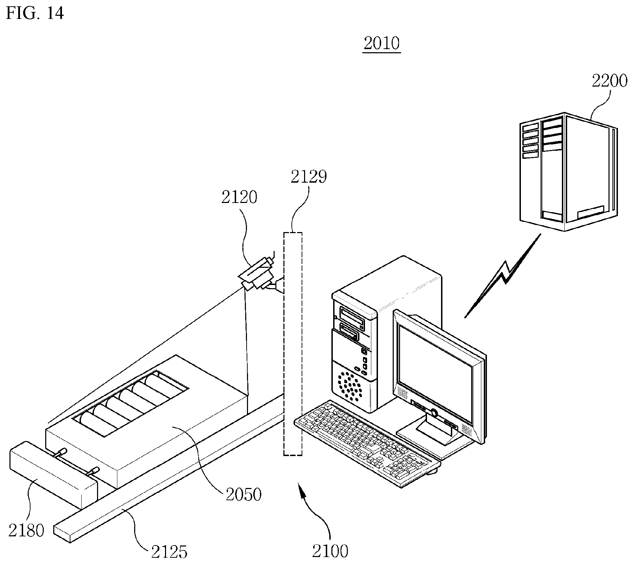

FIG. 14 is a diagram showing a certain example of a system environment supporting battery heat generation inspection based on unsupervised learning according to an embodiment of the present invention.

Referring to FIG. 14, a third system environment 2010 that supports a battery heat generation inspecting function based on unsupervised learning of the present invention may include components capable of performing a heat generation inspection of a third battery 2050 while performing charging/discharging of the third battery 2050 for quality control of the third battery 2050 during a manufacturing process of the third battery 2050. For example, the third system environment 2010 of the present invention may be used to perform the heat generation inspection of all the third batteries 2050, or some batteries sampled therefrom, manufactured in the battery production process.

The third system environment 2010 may be configured to detect heat generation while charging/discharging the third battery 2050 that has been manufactured in the battery production process (or, as needed, while charging/discharging a battery capable of charging/discharging even if manufacturing is not completed) in a quality assurance (QA)/quality control (QC) process. To this end, the third system environment 2010 may include a third battery 2050 and a third battery heat generation inspection apparatus 2100.

In an example, the third battery heat generation inspection apparatus 2100 may include a third battery holder 2125 on which the third battery 2050 can be placed, and a third charging/discharging device 2180 for charging/discharging the third battery 2050. Here, at least some of the third battery holder 2125 and the third charging/discharging device 2180 may be components independent of or included in the third battery heat generation inspection apparatus 2100. In an example, only the third charging/discharging device 2180 may be included in the third battery heat generation inspection apparatus 2100.

Additionally or alternatively, a third server device 2200 that forms a communication channel with the third battery heat generation inspection apparatus 2100 and supports battery heat generation inspection may be further included. Although the third system environment 2010 is exemplified as a form in which the third server device 2200 supports the third battery heat generation inspection apparatus 2100, the present invention is not limited thereto. For example, without the third server device 2200, the third system environment 2010 may be configured to perform heat generation inspection of the third battery 2050 and result notification based on an electronic device (e.g., the third battery heat generation inspection apparatus 2100) that can execute an embedded program. In this case, the third server device 2200 may be omitted from the third system environment 2010.

The third battery 2050 is a secondary battery and may include an anode made of an anode active material, a cathode made of a cathode active material, a separator separating the anode and the cathode, and an electrolyte disposed between the anode and the separator or between the cathode and the separator. The third battery 2050 may store power supplied from the outside (charging), and supply the stored power to the outside (discharging) according to circuit operation. The third battery 2050 may generate heat during the charging and discharging process, and thus, it is necessary to inspect the heat generation of the third battery 2050 for quality control. In the present invention, the heat generation of the third battery 2050 is inspected during charging and discharging of the third battery 2050, so that it is possible to distinguish whether the third battery 2050 is a good product or a defective product. In the present invention, the third battery 2050 may be placed on the third battery holder 2125 in a form wrapped by a battery pack, and then charged or discharged by the third charging/discharging device 2180. In this regard, the third battery holder 2125 may further include wiring that connects the third charging/discharging device 2180 to a power source.

The third battery heat generation inspection apparatus 2100 may inspect heat generation during charging and discharging the third battery 2050 (or battery pack) manufactured completely. In this regard, the third battery heat generation inspection apparatus 2100 may include the third battery holder 2125 on which the third battery 2050 is placed, the third charging/discharging device 2180 for charging and discharging the third battery 2050, a third spectral camera 2120 capable of acquiring a spectral image of the third battery 2050 during charging and discharging of the third battery 2050, and a computing device for controlling the third charging/discharging device 2180 and the third spectral camera 2120. In addition, the third battery heat generation inspection apparatus 2100 may further include a third mounting structure 2129 for adjusting the height or direction of the third spectral camera 2120. The third battery 2050 may be transferred to the third battery holder 2125 for quality assurance and quality control after its manufacture is completed. At this time, the third battery 2050 may be placed at a specific location of the third battery holder 2125 that can be captured by the third spectral camera 2120. The third battery holder 2125 may include a structure of temporarily fixing the third battery 2050 after the third battery 2050 is placed, and a structure on which the third charging/discharging device 2180 for supplying power for charging/discharging the third battery 2050 is placed. Additionally, the third battery holder 2125 may include at least one of a heating device and a cooling device which are capable of controlling a charging/discharging environment of the third battery 2050. Based on this, the third battery holder 2125 may provide a designated temperature environment in which the third battery 2050 is charged or discharged under the control of the computing device.

The third charging/discharging device 2180 may perform charging/discharging of the third battery 2050 placed on the third battery holder 2125 under the control of the computing device. In this regard, the third charging/discharging device 2180 may be configured to be connected to a permanent power source and supply power from the permanent power source to the third battery 2050 or discharge power from the third battery 2050. In relation to discharging the third battery 2050, the third charging/discharging device 2180 may include a load that can consume power of the third battery 2050. By operating the third charging/discharging device 2180, the third battery heat generation inspection apparatus 2100 may capture at least one spectral image using the third spectral camera 2120 while the third battery 2050 is being charged or discharged, and compare the captured spectral image with a reference model created by an unsupervised learning method to determine whether the third battery 2050 is a good product or a defective product. In relation to creating the reference model, the third battery heat generation inspection apparatus 2100 may acquire spectral images captured in a predetermined number or more of charging/discharging status of the third battery 2050.

Additionally, the third battery heat generation inspection apparatus 2100 may process a heat generation inspecting function for the third battery 2050 through the third server device 2200. In this case, the third battery heat generation inspection apparatus 2100 may be configured to transmit a spectral image of the third battery 2050 to the third server device 2200, and then receive and output battery heat generation inspecting result from the third server device 2200. In addition, the third battery heat generation inspection apparatus 2100 may be configured to independently perform the heat generation inspecting function and a good product determination without separately operating the third server device 2200.

The third server device 2200 may establish a communication channel with the third battery heat generation inspection apparatus 2100. The third server device 2200 may receive at least one spectral image of the third battery 2050 from the third battery heat generation inspection apparatus 2100 and analyze the at least one received spectral image to detect the battery heat generation state. In this process, the third server device 2200 may pre-store a server reference model for comparative analysis of the currently acquired spectral image. The server reference model stored in the third server device 2200 may also be created through supervised learning of the spectral images collected and provided by the third battery heat generation inspection apparatus 2100. The third server device 2200 may provide the analysis result of the currently acquired spectral image for the third battery 2050 to the third battery heat generation inspection apparatus 2100.

As described above, in the third system environment 2010 that supports the battery heat generation inspecting function according to an embodiment of the present invention, the third battery heat generation inspection apparatus 2100 can acquire the spectral image of the third battery 2050 and compare it with the reference model to identify the battery heat generation state, thereby supporting the determination of whether the third battery 2050 is a good product or a defective product.

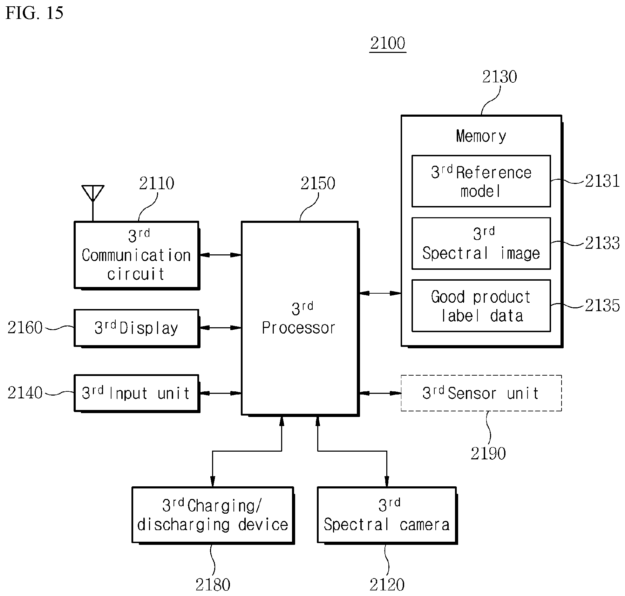

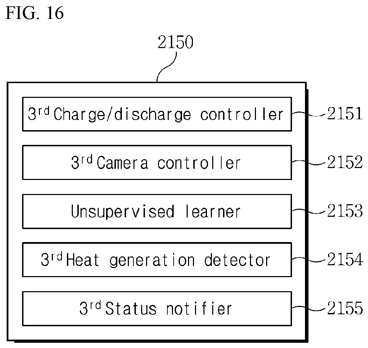

FIG. 15 is a diagram showing an example of components of a third battery heat generation inspection apparatus according to an embodiment of the present invention, and FIG. 16 is a diagram showing an example of components of a third processor in FIG. 15.

First, referring to FIG. 15, the third battery heat generation inspection apparatus 2100 according to an embodiment of the present invention may include a third communication circuit 2110, a third spectral camera 2120, a third memory 2130, a third input unit 2140, a third display 2160, a third charging/discharging device 2180, and a third processor 2150. Additionally or alternatively, the third battery heat generation inspection apparatus 2100 may further include a third sensor unit 2190 including at least one of a contact type sensor or a non-contact type sensor capable of collecting sensor information related to the heat generation state of the third battery 2050. The third sensor unit 2190 may be omitted from the third battery heat generation inspection apparatus 2100, and also at least one of the third communication circuit 2110, the third input unit 2140, the third display 2160, and the third charging/discharging device 2180 may be omitted from the third battery heat generation inspection apparatus 2100. For example, the third battery heat generation inspection apparatus 2100 may not include the third display 2160 and may be configured to transmit information regarding heat generation inspection to a designated user terminal through the third communication circuit 2110. The third charging/discharging device 2180 may be disposed as a separate component of the third system environment 2010 rather than as a component of the third battery heat generation inspection apparatus 2100 as described above.

In addition, the third battery heat generation inspection apparatus 2100 may further include, as described above in FIG. 14, at least one of a third mounting structure 2129 capable of adjusting at least one of a shooting distance or a shooting angle between the third spectral camera 2120 and the third battery 2050 to capture a spectral image of the third battery 2050 using the at least one third spectral camera 2120, and a third battery mounting holder 2125 on which the third battery 2050 is placed. In addition, the third battery heat generation inspection apparatus 2100 may further include a power supply (e.g., a permanent power supply or a battery) required for the operation of at least one of the above-described components, for example, the third communication circuit 2110, the third spectral camera 2120, the third memory 2130, the third input unit 2140, the third display 2160, the third charging/discharging device 2180, the third sensor unit 2190, and the third processor 2150. The power supply may also be a permanent power supply that supplies power to the third battery 2050 through the third charging/discharging device 2180.

The third communication circuit 2110 may support a communication function of the third battery heat generation inspection apparatus 2100. For example, the third communication circuit 2110 may form a communication channel with the third server device 2200. If the third server device 2200 is designed to perform the calculation required for spectral image analysis on the third battery 2050 according to an embodiment of the present invention, the third communication circuit 2110 may transmit at least one spectral image collected by the third spectral camera 2120 to the third server device 2200. In addition, the third communication circuit 2110 may receive the analysis result of the spectral image (e.g., a status anomaly result based on the heat generation state of the third battery 2050) from the third server device 2200 and transmit it to the third processor 2150 according to setting or under the control of the third processor 2150. Alternatively, the third communication circuit 2110 may transmit heat generation information of the third battery 2050 (or a status anomaly determination result of the third battery 2050) to a designated user terminal (e.g., a terminal owned by an administrator of the third battery heat generation inspection apparatus 2100).

Additionally or alternatively, the third communication circuit 2110 may form a communication channel with an external server device and receive a third reference model 2131 from the external server device. The third reference model 2131 may include a model created by performing supervised learning on a certain number or more of spectral images. In this regard, the third communication circuit 2110 may form a communication channel with the external server device at a certain cycle under the control of the third processor 2150, and, if there is a newly updated third reference model 2131, receive the updated third reference model 2131 from the external server device and store (or update) it in the third memory 2130.

The third spectral camera 2120, which is the third spectral camera 2120 of the third battery heat generation inspection apparatus 2100 described above in FIG. 14, may be disposed to capture a spectral image of the third battery 2050. Although it is descried in FIG. 14 that the third battery heat generation inspection apparatus 2100 includes one third spectral camera 2120, the present invention is not limited thereto. For example, the third spectral camera 2120 may be arranged in plural numbers. In this case, a plurality of spectral cameras may be arranged to capture images of the third battery 2050 from various angles or various distances. The third spectral camera 2120 may be activated under the control of the third processor 2150, and a spectral image of the third battery 1050 may be transmitted to the third processor 2150. Alternatively, in response to the control of the third processor 2150, the spectral image acquired by the third spectral camera 2120 may be transmitted to the third server device 2200 via the third communication circuit 2110.

The third memory 2130 may store at least one program or data required for the operation of the third battery heat generation inspection apparatus 2100. For example, the third memory 2130 may temporarily or semi-permanently store an application related to the battery heat generation inspecting function, a control program required for operating the at least one third spectral camera 2120, and the spectral image 2133 acquired through the at least one third spectral camera 2120. For example, the third memory 2130 may store the third reference model 2131 used for comparative analysis with the currently captured spectral image for the third battery 2050. The third reference model 2131 may be received from an external server device as mentioned above. Alternatively, if a plurality of third spectral images 2133 are accumulatively stored in a predefined amount or more, the third reference model 2131 may be created through supervised learning on the spectral images 2133. For supervised learning, the spectral image 2133 may be divided into a plurality of data (e.g., multimodal data). Additionally or alternatively, the third memory 2130 may store sensor information collected by the third sensor unit 2190. The sensor information stored in the third memory 2130 may include sensor information acquired at the same time as the time at which the spectral image 2133 is acquired or at a time close to the time at which the spectral image 2133 is acquired within a predefined range (or the closest time to the time at which the spectral image 2133 is acquired). The sensor information may be used to designate a good or defective product of the third battery 2050 based on the spectral image 2133 or for machine learning or artificial neural network learning. The multimodal data may be stored in the third memory 2130 as a multimodal data set together with the sensor information.

The third memory 2130 may store good product label data 2135 separately. The good product label data 2135 may include, among the spectral images collected during charging or discharging of the third battery 2050 in relation to the creation of the third reference model 2131, spectral images having good product characteristics that the heat generation state of the third battery 2050 is less than a predefined reference value. In an example, the spectral images acquired at the same time as the time at which the heat generation of the third battery 2050 is less than the reference value through the sensor information on the detected temperature of the third battery 2050 may be stored as the good product label data 2135. Or, the good product label data 2135 may include multimodal data classified by predefined frequency bands of the spectral images identified as good products. In another example, the good product label data 2135 may include spectral images capturing the third battery 2050 inputted as a good product by the user.

The third input unit 2140 may include various input tools for manipulating the third battery heat generation inspection apparatus 2100. For example, based on a user's manipulation, the third input unit 2140 may create at least one of an input signal for requesting the execution of an application related to the heat generation inspecting function of the third battery 2050, an input signal for activating the third spectral camera 2120, an input signal for manipulating the third spectral camera 2120 to acquire the spectral image 2133, and an input signal for requesting the output of an analysis result of the spectral image 2133. In addition, the third input unit 2140 may create an input signal for requesting the creation of the third reference model 2131. For example, the third reference model 2131 may be created based on at least a part of the multimodal data set described above. In addition, the third input unit 2140 may receive a user input corresponding to the label designation for a good or defective product for the spectral image. The third input unit 2140 may include at least one of various tools, such as a soft key (or an input tool based on a touchscreen or touch pad), a physical key, a voice input device, a gesture input device, and a jog shuttle.

The third display 2160 may output at least one screen necessary for the operation of the third battery heat generation inspection apparatus 2100. For example, the third display 2160 may output at least one of an application execution screen related to the heat generation inspecting function for the third battery 2050, a screen indicating whether at least one device (e.g., at least one of the third spectral camera 2120, the third mounting structure 2129, the third communication circuit 2110, the third input unit 2140, the third charging/discharging device 2180, and the third sensor unit 2190) included in the third battery heat generation inspection apparatus 2100 is in a normal state, a screen for activating the third spectral camera 2120, a screen for acquiring the spectral image 2133 through the third spectral camera 2120, a screen for creating the third reference model 2131 based on the spectral image 2133, and a screen for detecting a battery heat generation state according to analysis of a new spectral image after learning of the third reference model 2131 is completed. In addition, when the third battery heat generation inspection apparatus 2100 is operated in conjunction with the third server device 2200, the third display 2160 may output a screen for access to the third server device 2200, and a new spectral image analysis result (e.g., a status anomaly determination result based on the battery heat generation state) received from the third server device 2200.

The third charging/discharging device 2180 may control charging/discharging of the third battery 2050 mounted on the third battery holder 2125. In this regard, the third charging/discharging device 2180 may be directly connected to a power source. The third charging/discharging device 2180 may include a charging circuit for supplying power for charging the third battery 2050 under the control of the third processor 2150, and a discharging circuit for discharging the third battery 1050. In order to discharge the third battery 2050, the third charging/discharging device 2180 may further include a load that consumes the power of the third battery 2050. The third charging/discharging device 2180 may detect a remaining charge amount or a discharge amount of the third battery 2050.

The third sensor unit 2190 may include at least one sensor capable of collecting various types of sensor information related to the third battery 2050 when the third battery 2050 is charged or discharged. For example, the third sensor unit 2190 may include a temperature sensor capable of detecting the surface temperature of the third battery 2050 when the third battery 2050 is charged or discharged. Alternatively, the third sensor unit 2190 may include an RGB sensor (or RGB camera) capable of detecting a change in the volume of the third battery 2050 when the third battery 2050 is charged or discharged.

The third processor 2150 may perform at least one of the transmission and processing of signals necessary for the operation of the third battery heat generation inspection apparatus 2100, the storage of processing results, and the output of processing results. For example, the third processor 2150 may control the execution and termination of an application related to the heat generation inspecting function for the third battery 2050, and may perform a process of creating the third reference model 2131 based on unsupervised learning by at least partially or fully utilizing the spectral images collected by the third spectral camera 2120 or the spectral images received from an external server device.

Or, the third processor 2150 may acquire a new spectral image by controlling the third spectral camera 2120, and output a status anomaly result for the battery heat generation state by applying the acquired new spectral image to the pre-stored third reference model 2131. In this regard, the third processor 2150 may include components as shown in FIG. 16.

Referring to FIG. 16, the third processor 2150 may include at least one of a charge/discharge controller 2151, a camera controller 2152, an unsupervised learner 2153, a heat generation detector 2154, and a status notifier 2155.

The charge/discharge controller 2151 may control the third charging/discharging device 2180 to control the charging or discharging of the third battery 2050. In this regard, the charge/discharge controller 2151 may check the remaining capacity of the third battery 2050 when the third battery 2050 placed on the third battery holder 2125 is connected to the third charging/discharging device 2180. In this operation, the charge/discharge controller 2151 may collect the remaining capacity information of the third battery 2050 based on at least one of communication using a connected wire or short-range wireless communication between the third charging/discharging device 2180 and the third battery 2050. The charge/discharge controller 2151 may determine the size (e.g., voltage and current) of the charging power of the third battery 2050 and the charging speed (e.g., fast charging or slow charging) based on information about the third battery 2050, and control to supply the corresponding charging power to the third battery 2050. When the charging of the third battery 2050 starts, the charge/discharge controller 2151 may notify it to the camera controller 2152. The charge/discharge controller 2151 may complete the charging of the third battery 2050 when the third battery 1050 is charged up to or more than a predefined threshold value (e.g., 100% charged). Also, the charge/discharge controller 2151 may check the natural discharge amount of the third battery 2050 after a predefined period of time has elapsed after the third battery 2050 is fully charged, and control to perform an additional charging operation according to the natural discharge. The charge/discharge controller 2151 may control the third charging/discharging device 2180 to perform a discharging operation of the third battery 2050 charged up to or more than the predefined threshold value, and when the discharging operation starts, it may transmit information about this to the camera controller 2152. When discharging the third battery 2050, the charge/discharge controller 2151 may control the output of the third battery 2050 to have various discharging speeds (e.g., fast discharging or slow discharging) by adjusting the size of the load. When the load amount changes, information about this may be transmitted to the unsupervised learner 2153.

The charge/discharge controller 2151 may control the third battery holder 2125 during the charging or discharging operation of the third battery 2050 so that the temperature environment for charging or discharging corresponds to a predefined setting value. For example, the charge/discharge controller 2151 may control a heating device or a cooling device provided in the third battery holder 2125 so that the temperature environment for charging or discharging the third battery 2050 is in a state of a certain sub-zero temperature value, in a state of room temperature, in a state of a certain positive temperature value, or the like. The charge/discharge controller 2151 may collect the charging speed (or the charging speed up to a specified target charging amount) or the discharge speed (or the discharge speed up to a specified target discharging amount) of the third battery 2050 according to the temperature environment and the size of the charging power. Various types of information related to the charging and discharging environment of the third battery 2050, such as information on the temperature environment, information on the size of the charging power, charging speed, and discharge speed, may be stored in the third memory 2130 by matching with the acquired spectral image 2133 when the spectral image 2133 is acquired. The temperature environment adjusting function of the charge/discharge controller is optional and may be omitted.

Upon receiving information about the charging or discharging operation of the third battery 2050 from the charge/discharge controller 2151, the camera controller 2152 may control the third spectral camera 2120 at the corresponding time to capture a spectral image of the third battery 2050. The camera controller 2152 may collect a plurality of spectral images captured in various charging/discharging environments of the third battery 2050 to create the third reference model 2131 and store the collected images in the third memory 2130. Or, the camera controller 2152 may control the third spectral camera 2120 to capture a spectral image in a state where the third battery 2050 is being charged by a predefined amount or more or at a predefined charging speed or discharging speed. After the third reference model 2131 is created or after learning is completed, the camera controller 2152 may collect at least one spectral image related to the third battery 2050 to determine the current heat generation state of the third battery 2050. For example, the camera controller 2152 may request the charge/discharge controller 2151 to adjust the charge/discharge temperature environment through the third battery holder 2125, and collect new spectral images for each temperature environment and each charge/discharge size.

The unsupervised learner 2153 may perform unsupervised learning on the good product label data 2135 when at least some of the spectral images acquired under the control of the camera controller 2152 and the multimodal data extracted from the spectral images are stored in the third memory 2130 and the amount of the spectral images (or the amount of multimodal data) stored in the third memory 2130 exceeds a predefined certain amount. In an example, the unsupervised learner 2153 may process the spectral image acquired by the third spectral camera 2120 as unimodal data, or process it as multimodal data by dividing it into visible light in a wavelength band of 400 to 700 nm, ultraviolet light in a wavelength band shorter than 400 nm, and infrared light in a wavelength band longer than 700 nm and then decompose it into independent spectra in the form of height (H) x width (W) x channel (C, wavelength). In case of decomposing into independent spectra, the unsupervised learner 2153 may obtain (H x W) spectra equal to the product of the height 'H' and the width 'W' of the dimension corresponding to the same channel.

Additionally or alternatively, the unsupervised learner 2153 may match the sensor information acquired by the third sensor unit 2190 including at least one of a non-contact type sensor or a contact type sensor with the multimodal data in pairs while recording the time of collection, and store them as a multimodal data set. If the collection rates inevitably do not match, the unsupervised learner 2153 may form a pair with data corresponding to the closest collection time between different sensors, based on the time recorded in each data. The unsupervised learner 2153 may label each collected data pair as a good product or a defective product based on a user input, which may become the output 'y' of the artificial neural network learning. Alternatively, the unsupervised learner 2153 may selectively label specific spectral images (or multimodal data) as good products according to predefined reference values or user input. In the case where the user cannot inevitably designate a label, the unsupervised learner 2153 may designate a pseudo label based on the clustering results for the spectral images, and when the pseudo label is designated, the cluster with the largest size or highest density in the clustering results may be regarded as a good cluster.

The unsupervised learner 2153 may initialize an artificial neural network and perform unsupervised learning when data (e.g., spectral images or multimodal data) 'x' and label 'y' are accumulated to a certain amount or more. For unsupervised learning, the unsupervised learner 2153 may use a generative artificial neural network (e.g., at least one or a combination of a multi-layer perceptron (MLP), a convolutional neural network (CNN), a recurrent neural network (RNN), and a graph neural network (GNN)). Alternatively, the unsupervised learner 2153 may optionally use a traditional machine learning-based generative model. The traditional machine learning model may selectively use one of a decision tree (DT), a random forest (RF), an extreme gradient boosting (XGB), a light gradient boosting machine (LGBM), a support vector machine (SVM), or a k-nearest neighbor classifier (KNN), may learn a plurality of specific models, or build an ensemble model in the form of combining multiple models.

The unsupervised learner 2153 may use a part of the entire data as a learning data set for unsupervised learning, and the remaining part as a validation data set. The split ratio of the learning data set and the validation data set may be 8:2 and may be changed to a value such as 7:3, 9:1, etc. according to a user input. The learning data set is good product data, and may be stored as the good product label data 2135 in the third memory 2130, for example.

The unsupervised learner 2153 may create the third reference model 2131 by performing unsupervised learning using only the good product label data 2135 corresponding to the learning data set, evaluate the third reference model 2131 with the validation data set when learning is completed, and output the evaluation result through the system UI to support the user to check the validation performance. The validation data set may be basically in the form of a certain amount of accumulated data of the good product label. If the validation data set includes the data of the defective product label, and if the quantity is a certain level or more, the unsupervised learner 2153 may measure the binary classification performance into good or defective products through the residual error criterion of the generative model, and report the measurement result to the user through the system UI. If there is no data of the defective product label in the validation data set, or if there is data but it does not include a quantity more than a level suitable for validation, the unsupervised learner 2153 may calculate the mean and standard deviation of the generation error of the good product data from the generative model. For example, the calculation method may utilize the L2 distance or use, as needed, various indicators such as L1 and SSIM. Based on the mean and standard deviation of the restoration error of the calculated good product data, the unsupervised learner 2153 may designate the threshold of the normal range as an outer area of µ (mean) ± 1.5σ (standard deviation), and may determine a case out of that range as a status anomaly. The unsupervised learner 2153 may set an upper or lower limit value such as µ + 1.5σ or µ - 1.5σ instead of a range and then perform a status anomaly determination based on whether it exceeds or falls below that value. Here, 1.5 denotes a threshold and may be changed to various levels such as 1 and 3 depending on a user's adjustment.

The unsupervised learner 2153 may provide the validation performance value of the learning-completed third reference model 2131 to the user (e.g., output it to the display) and determine whether to operate the corresponding model based on a user input. Alternatively, the unsupervised learner 2153 may automatically apply the learning-completed third reference model 2131 if the validation performance is higher than or equal to a predefined reference value. For example, the unsupervised learner 2153 may notify the learning completion of the third reference model 2131 to the heat generation detector 2154. Alternatively, if the validation performance of the third reference model 2131 is lower than the predefined reference value, the unsupervised learner 2153 may repeatedly perform additional collection of spectral images and model learning based on all spectral images including the additionally collected spectral images until the validation performance becomes higher than or equal to the reference value.

If the unsupervised learning of the third reference model 2131 is completed or the unsupervised learning-completed third reference model 2131 is stored in the third memory 2130, the heat generation detector 2154 may detect the heat generation state of the third battery 2050 based on the third reference model 2131. In this regard, if the heat generation detector 2154 acquires a new spectral image of the third battery 2050 by requesting it from the camera controller 2152, the heat generation detector 2154 may apply the acquired new spectral image to the third reference model 2131 and determine whether the heat generation state of the third battery 2050 is an anomaly state. Alternatively, the heat generation detector 2154 may divide the new spectral image into predefined frequency bands and apply the divided multimodal data to the third reference model 2131, thereby transmitting whether the third battery 2050 is in an anomaly state or not (or is a good product or a defective product) to the status notifier 2155.

The status notifier 2155 may receive a determination value of the third battery 2050 from the heat generation detector 2154 and output information corresponding to the received determination value. For example, the status notifier 2155 may output good product determination information or defective product determination information of the third battery 2050 currently being charged or discharged through the third display 2160 of the third battery heat generation inspection apparatus 2100. Alternatively, the status notifier 2155 may transmit a message including the good or defective product determination value of the third battery 2050 to a designated user terminal through the third communication circuit 2110.

As described above, according to the present invention, the third battery heat generation inspection apparatus 2100 of the present invention determines whether the third battery 2050 is a good or defective product, based on a spectral image, and supports performing the good or defective product determination according to the heat generation state of the third battery 2050 by using the third reference model 2131 created based on unsupervised learning.

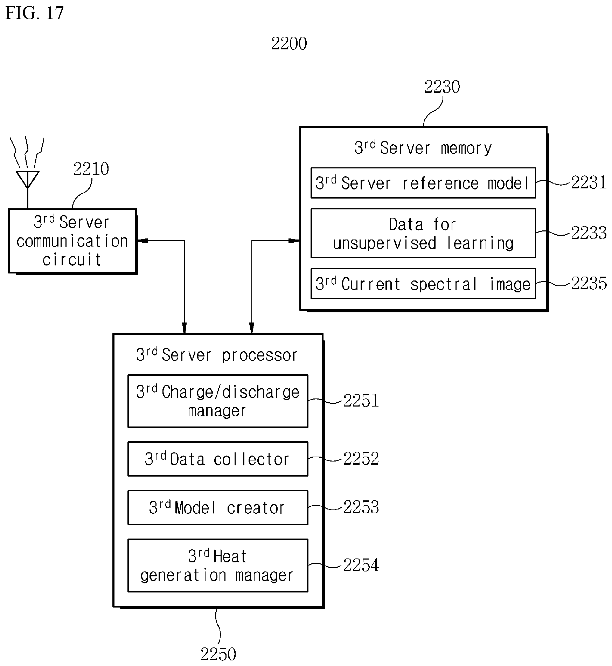

FIG. 17 is a diagram showing an example of components of a third server device according to an embodiment of the present invention. As described above, if the third battery heat generation inspection apparatus 2100 is designed to independently perform the battery heat generation inspecting function according to an embodiment of the present invention, the third server device 2200 may be omitted.

Referring to FIGS. 14 to 17, the third server device 2200 of the present invention may include a third server communication circuit 2210, a third server memory 2230, and a third server processor 2250.

The third server communication circuit 2210 may form a communication channel with the third battery heat generation inspection apparatus 2100. For example, the third server communication circuit 2210 may receive at least one spectral image from the third battery heat generation inspection apparatus 2100 at a specified cycle or in response to a predefined event occurrence (e.g., an event of detecting a state in which the third battery 2050 is placed on the third battery holder 2125). The at least one received spectral image may be used to create a third server reference model 2231 based on unsupervised learning. In another example, the third server communication circuit 2210 may receive the third server reference model 2231 from an external server device. The third server communication circuit 2210 may receive at least one third current spectral image 2235 of the third battery 2050 requiring heat generation inspection, and transmit the corresponding analysis result to the third battery heat generation inspection apparatus 2100 (or a designated user terminal) under the control of the third server processor 2250.

The third server memory 2230 may store at least one program or data required for the operation of the third server device 2200. For example, the third server memory 2230 may store at least one of data 2233 for unsupervised learning corresponding to a plurality of spectral images received for the creation of the third server reference model 2231, a third current spectral image 2235 received for battery heat generation inspection, and the third server reference model 2231. The third server reference model 2231 may correspond to the third reference model 2131 stored in the third memory 2130 of the third battery heat generation inspection apparatus 2100 described above. In an example, the third server reference model 2231 may be created by the third battery heat generation inspection apparatus 2100 and provided to the third server device 2200. Alternatively, the third server reference model 2231 may be created by performing unsupervised learning on the unsupervised learning data 2233 stored in the third server memory 2230. The unsupervised learning data 2233 may include at least some of a plurality of spectral images provided by the third battery heat generation inspection apparatus 2100, data by band (or multimodal data) in which each of the plurality of spectral images is divided by predefined frequency bands, and sensor information acquired at the same time as or closest time to the time of collecting the plurality of spectral images. In an example, the unsupervised learning data 2233 of the present invention may include only data designated as a good product label among the plurality of spectral images.

The third server processor 2250 may control the transmission and processing of signals required for the operation of the third server device 2200, storage of results, transmission of results, or transmission of messages corresponding to results. In this regard, the third server processor 2250 may include a third charge/discharge manager 2251, a third data collector 2252, a third model creator 2253, and a third heat generation manager 2254.

The third charge/discharge manager 2251 may manage the charging/discharging of the third battery 2050. In this regard, the third charge/discharge manager 2251 may form a communication channel with the third battery heat generation inspection apparatus 2100, control the charging/discharging of the third battery 2050 according to a predefined plan when the third battery 2050 is placed on the third battery holder 2125, and collect charge/discharge related information (e.g., at least some of the charge/discharge temperature environment of the third battery 2050, the charge/discharge speed, and the size of the charge/discharge power).

The third data collector 2252 may receive a spectral image of the third battery 2050 from the third battery heat generation inspection apparatus 2100. The spectral image received from the third battery heat generation inspection apparatus 2100 may include spectral images for the creation of the third server reference model 2231 or the third current spectral image 2235 for the inspection of the heat generation of the third battery 2050. When the spectral images for the creation of the third server reference model 2231 are received, the third data collector 2252 may store the received spectral images as at least a part of the unsupervised learning data 2233 in the third server memory 2230. In this operation, the third data collector 2252 may separate the received spectral images into predefined frequency bands (e.g., ultraviolet band, visible light band, infrared band), group the spectra of each frequency band in the form of multimodal data, and store them as the unsupervised learning data 2233 in the third server memory 2230. Additionally or alternatively, the third data collector 2252 may collect sensor information at the time when the spectral images are collected, match the collected sensor information with the multimodal data, and store it as a multimodal data set in the third server memory 2230.

The third model creator 2253 may create the third server reference model 2231. Alternatively, the third model creator 2253 may create the third server reference model 2231 at the request of the third battery heat generation inspection apparatus 2100 and provide the created third server reference model 2231 to the third battery heat generation inspection apparatus 2100 as the third reference model 2131 to be used by the third battery heat generation inspection apparatus 2100. Meanwhile, if the third server reference model 2231 is pre-stored in the third server memory 2230 or if the third battery heat generation inspection apparatus 2100 provides the third server reference model 2231, the third model creator 2253 may be omitted.

The third model creator 2253 may perform a good product label designation or a defective product label designation according to a user input for the collected unsupervised learning data 2233, and this may be processed as an output y of artificial neural network learning. In order to receive the user input, the third model creator 2253 may output the unsupervised learning data 2233 to the third display 2160 of the third battery heat generation inspection apparatus 2100, and receive a good product or defective product label designation for the corresponding data. Alternatively, the third model creator 2253 may receive only data for which the user selectively designates a good product label for at least certain good product data. In another example, if a user label designation procedure is not planned, the third model creator 2253 may perform clustering on spectral images, and designate a pseudo label based on the clustering result to the corresponding data. For example, the third model creator 2253 may regard the clusters with the largest size or the highest density as good product clusters (or designate them as a good product label). When at least a part of the unsupervised learning data 2233 that can be used as the input x of the artificial neural network (or data designated as a good product label) and the data that can be used as the output y of the artificial neural network are accumulated to a predefined amount or more, the third model creator 2253 may initialize the artificial neural network and perform unsupervised learning on the corresponding data. The third model creator 2253 may adopt a generative artificial neural network (e.g., at least one or a combination of a multi-layer perceptron (MLP), a convolutional neural network (CNN), a recurrent neural network (RNN), and a graph neural network (GNN)) for unsupervised learning, or may optionally use a traditional machine learning-based generative model. For learning, a part of the unsupervised learning data 2233 is used, and the remaining part may be used as a validation data set. The split ratio of the learning data set and the validation data set may be various values such as 8:2, 7:3, 9:1, etc., and may be changed according to user's adjustment. The third model creator 2253 may perform learning by extracting only the data corresponding to the good product label from the learning data set, and when learning is completed, the model may be evaluated with the split validation data set and the validation performance may be reported to the user through the system UI. The validation data set may be basically in the form of a certain amount of accumulated data of the good product label, and when the validation data set includes the data of the defective product label and the quantity is a certain level or more, the third model creator 2253 may measure the binary classification performance into good or defective products through the residual error of the generative model, and output the measurement result through the system UI. If there is no defective product label data in the validation data set or it does not include a quantity exceeding a pre-specified level, the third model creator 2253 may calculate the mean and standard deviation of the generation error of good product data from the generative model, and then perform status anomaly determination based on this. In the calculation process, the L2 distance may be utilized, and various indicators such as L1 and SSIM may be used depending on the settings or needs. The third model creator 2253 may designate the threshold of the normal range as an outer area of µ (mean) ± 1.5σ (standard deviation) based on the mean and standard deviation of the restoration error of the calculated good product data. Alternatively, the third model creator 2253 may set the upper limit value µ + 1.5σ or the lower limit value µ - 1.5σ. In the above-described range value setting, the constant 1.5 acts as a threshold and may be changed to various levels such as 1 and 3 depending on the user's adjustment.

When the third heat generation manager 2254 is notified of receiving the third current spectral image 2235 from the third data collector 2252, it may perform an analysis on the third current spectral image 2235 stored in the third server memory 2230. For example, the third heat generation manager 2254 may perform clustering on the third current spectral image 2235 and compare the generated cluster with the third server reference model 2231 to determine whether it is within the normal range (e.g., µ + 1.5σ) of the third server reference model 2231. If the cluster corresponding to the third current spectral image 2235 deviates from the predefined normal range of the third server reference model 2231, the third heat generation manager 2254 may determine this as a status anomaly and determine the third battery 2050 corresponding to the third current spectral image 2235 as a defective product. Or, the third heat generation manager 2254 may perform spectrum classification by frequency band for the third current spectral image 2235, and compare a cluster corresponding to spectra of at least some frequency bands (e.g., infrared bands) with the normal range of the third server reference model 2231 to determine whether it is a good or defective product. Here, the third server reference model 2231 may be created through clustering of spectra of some frequency bands of the plurality of spectral images included in the unsupervised learning data 2233.

As described above, the third server device 2200 according to an embodiment of the present invention can create the server reference model through unsupervised learning, thereby not only minimizing user intervention but also reliably processing determination regarding whether a battery is good or defective in terms of heat generation.

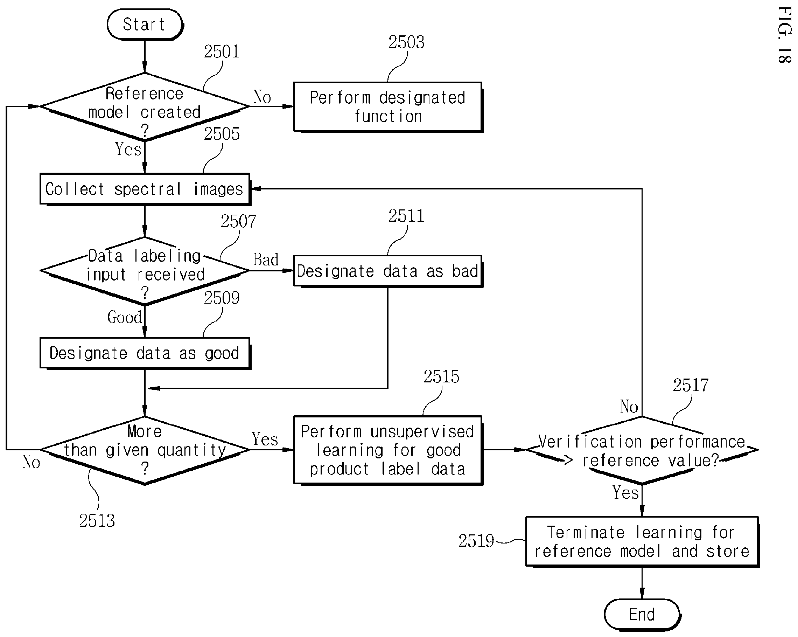

FIG. 18 is a diagram showing an example of a reference model creation method for battery heat generation inspection according to an embodiment of the present invention.

Referring to FIGS. 14 to 18, in relation to the method for creating a reference model for battery heat generation inspection according to an embodiment of the present invention, in the operation of the third battery heat generation inspection apparatus 2100, the third processor 2150 of the third battery heat generation inspection apparatus 2100 may check in step 2501 whether a request for creating the third reference model 2131 occurs. In this regard, the third processor 2150 of the third battery heat generation inspection apparatus 2100 may install an application related to battery heat generation inspection and, if there is no third reference model 2131 that the application can operate, automatically operate a reference model creation mode. Or, the third processor 2150 may identify the version of the third reference model 2131 and, if an update is required, operate the reference model creation mode. Or, the third processor 2150 may collect identification information of the third battery 2050 to perform heat generation inspection, and if there is no reference model corresponding to the third battery 2050 corresponding to the identification information, the third processor 2150 may enter the reference model creation mode.

If the creation of a reference model is not required, the third processor 2150 may perform a designated function in step 2503. For example, if the third reference model 2131 has already been stored in the third memory 2130, the third processor 2150 may perform an operation related to a heat generation inspecting function for the third battery 2050. Or, the third processor 2150 may inspect the current status (e.g., normal status or occurrence of a defect) of at least some of the components of the third battery heat generation inspection apparatus 2100 and output the inspection result. If there is no separate designated function, step 2503 may be omitted.

If a reference model creation mode is activated upon the request for creating a reference model, the third processor 2150 may operate the third spectral camera 2120 and collect at least one spectral image regarding the third battery 2050 placed on the third battery holder 2125 in step 2505. Prior to this operation, the third processor 2150 may collect information regarding a charging/discharging environment (e.g., temperature environment) of the third battery 2050 using the third sensor unit 2190 when the third battery 2050 is placed on the third battery holder 2125. The third processor 2150 may control at least one of a heating device or a cooling device placed on the third battery holder 2125 so that the temperature environment becomes a predefined temperature value. Or, if the temperature environment is within a predefined reference range, the temperature control operation described above may be omitted.

In step 2507, the third processor 2150 of the third battery heat generation inspection apparatus 2100 may check whether a data labeling input for at least one collected spectral image is received. In this regard, the third processor 2150 may output at least a part of the at least one spectral image (or spectral image and sensor information collected together with the spectral image) to the third display 2160 of the third battery heat generation inspection apparatus 2100. The third processor 2150 may receive an input (e.g., user input) of a label designating a good or defective product in response to the output information. Additionally or alternatively, when the third processor 2150 of the third battery heat generation inspection apparatus 2100 cannot perform data labeling according to a user input (e.g., when there is no component such as the third display 2160 or the third input unit 2140, or when data labeling is set in a separate manner), the third processor 2150 may perform clustering on at least one of the collected spectral images, and automatically perform labeling of a good or bad product for the spectral image based on the clustering result. For example, the third processor 2150 may automatically designate a cluster having the largest size or the highest density as a good product cluster in the clustering result. In another example, the third processor 2150 may temporarily designate spectral images corresponding to clusters having a size equal to or greater than a specified size or a density equal to or greater than a reference value as good products, output spectral images corresponding to the temporarily designated clusters to the third display 2160, and confirm the designation of good products according to a user input.

Upon receiving a good product input, the third processor 2150 may designate the corresponding spectral image as a good product in step 2509. Upon receiving a defective product input, the third processor 2150 may designate the corresponding spectral image as a defective product in step 2511. Meanwhile, in relation to designating a good or defective product labeling in steps 2507 to 2511, the third processor 2150 may perform clustering on at least some of spectral images without receiving a user input, compare the clustering result with a pre-stored cluster for distinguishing between good and defective products, and thereby designate the modeling data corresponding to the spectral image as a good or defective product. Or, in another example, the third processor 2150 may perform clustering on the spectral image and then designate a good or bad product based on the size or density of a predefined cluster.

Thereafter, in step 2513, the third processor 2150 may check whether or not the labeled spectral images are greater than or equal to a specified quantity. If it is less than the specified quantity, the third processor 2150 may return to step 2501 and re-performs the subsequent operations to collect more data.

When the accumulated data (or spectral images) are greater than or equal to the specified quantity, in step 2515, the third processor 2150 may perform supervised learning for good product label data. For example, the third processor 2150 may perform clustering on the spectra of the spectral images designated as a good product label, calculate a mean and a standard deviation as the clustering result, and then calculate a cluster normal range (e.g., mean + 1.5 x standard deviation) that can be determined as a good product. Or, the third processor 2150 may classify the spectral images designated as a good product label into a plurality of predefined frequency bands, and perform clustering and normal range calculation for the classified frequency bands. In an example, the third processor 2150 may calculate clusters for an infrared band among a plurality of frequency bands for each of the spectral images, and set a normal range using the mean and standard deviation of the clusters.

In step 2517, the third processor 2150 may check whether validation performance is higher than a reference value. In this regard, the third processor 2150 may divide the accumulated data (e.g., good product label data) into a learning data set and a validation data set at a certain ratio, and then perform a reference model creation through unsupervised learning on the learning data set in step 2515. When the unsupervised learning for the reference model is completed, the third processor 2150 may perform performance validation by applying the validation data set to the learning-completed third reference model 2131. In an example, the third processor 2150 may set the split ratio of the supervised learning data set and the validation data set to 8:2, or adjust it to 7:3, 9:1, etc. according to a user input.

If the validation performance is lower than the reference value, the third processor 2150 may return to step 2505 and re-perform the subsequent operations. If the validation performance is higher than the reference value, the third processor 2150 may end learning for the reference model in step 2519 and store it in the third memory 2130.

Meanwhile, although one example of the method for creating the third reference model 2131 by the third battery heat generation inspection apparatus 2100 is described in FIG. 18, the present invention is not limited thereto. For example, at least a part of the process of creating the third reference model 2131 may be performed in the third server device 2200. Accordingly, the reference model creation method described in FIG. 18 may be at least a part of the server reference model creation method in the third server device 2200.

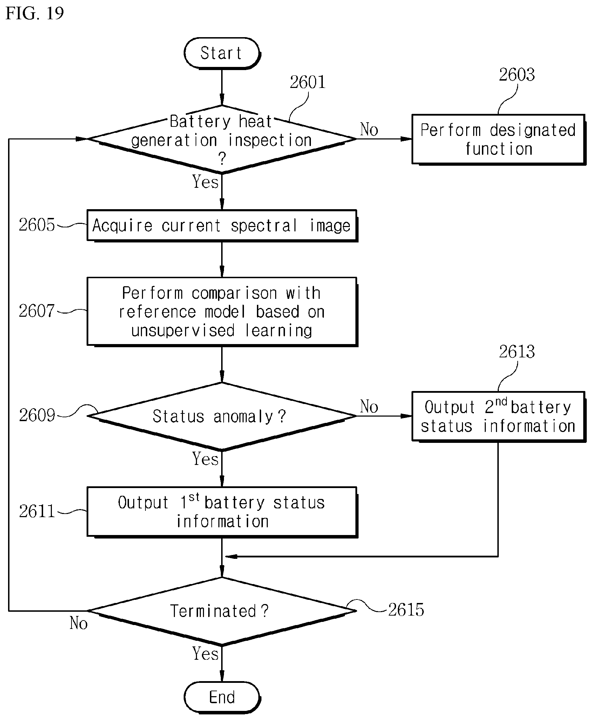

FIG. 19 is a diagram showing an example of a battery heat generation inspection method according to an embodiment of the present invention.

Referring to FIGS. 14 to 19, in an operating method of the third battery heat generation inspection apparatus 2100 related to the battery heat generation inspection method according to an embodiment of the present invention, the third processor 2150 may check in step 2601 whether a request for heat generation inspection of the third battery 2050 occurs. In this regard, the third processor 2150 may activate an application in response to a user input or according to predefined schedule information, and check whether a user input for selecting the heat generation inspecting function of the third battery 2050 among the corresponding application support functions occurs.

If no input for requesting the battery heat generation inspection is received, the third processor 2150 may perform a designated function in step 2603. For example, the third processor 2150 may output the status values of at least some of the respective components of the third battery heat generation inspection apparatus 2100. If there is no separate designated function, step 2603 may be omitted. When an input for requesting the battery heat generation inspection occurs, the third processor 2150 may detect that the third battery 2050 is placed on the third battery holder 2125 for inspecting the heat generation of the third battery 2050. When the third battery 2050 is placed on the third battery holder 2125, the third processor 2150 may control charging/discharging of the third battery 2050.

When battery charging/discharging is performed for the heat generation inspection of the third battery 2050 or when a predefined condition (e.g., the charge or discharge amount of the third battery 2050 is greater than or less than a specified value, or the charge speed or discharge speed is greater than or equal to a specified reference value), the third processor 2150 may acquire in step 2605 a current spectral image of the third battery 2050 being charged/discharged. In this operation, the third processor 2150 may also collect temperature environment information of the third battery 2050 being charged/discharged. When the temperature environment is out of a predefined reference range, heating device adjustment or cooling device adjustment may be performed to control the temperature environment.

After the current spectral image is acquired, in step 2607, the third processor 2150 may perform a comparison with the third reference model 2131 based on unsupervised learning for the acquired spectral image. In this operation, the third processor 2150 may perform clustering on the acquired current spectral image and determine whether the clustering result is within a normal range defined in the third reference model 2131. Alternatively, the third processor 2150 may divide the acquired spectral image into a plurality of predefined frequency bands in step 2607, perform clustering on spectra for each frequency band, and compare at least some of the clustering results to the corresponding third reference model 2131. For example, the third processor 2150 may divide the current spectral image into a visible light band, an ultraviolet band, and an infrared band, and perform unsupervised learning on data corresponding to each frequency band to compare them with the created reference models. Thus, the third reference model 2131 may include models corresponding to the respective frequency bands. Alternatively, the third processor 2150 may perform clustering only on the spectrum of the infrared band that is most closely related to heat generation, and compare the clustering result with a reference model (e.g., a reference model created through unsupervised learning on the spectrum of the infrared band).

In step 2609, the third processor 2150 may check whether the comparison result value corresponds to a status anomaly. If the result value in the comparison with the third reference model 2131 indicates the status anomaly, the third processor 2150 may output a first battery status information in step 2611. The first battery status information may include, for example, information indicating that the third battery 2050 currently undergoing the heat generation inspection is a defective product. The third processor 2150 may output the first battery status information to the third display 2160 or a designated administrator terminal. Additionally, the third processor 2150 may output information requesting disposal or re-inspection of the third battery 2050.

If the result value in the comparison with the third reference model 2131 is in a normal range, the third processor 2150 may output a second battery status information in step 2613. The second battery status information may include information indicating that the third battery 2050 is a good product. The third processor 2150 may output the second battery status information to the third display 2160 or a designated administrator terminal.

In step 615, the third processor 2150 of the third battery heat generation inspection apparatus 2100 may check whether to terminate the battery heat generation inspecting function. If there is no occurrence of an event related to the termination of the battery heat generation inspecting function, the third processor 2150 may return to step 2601 and re-perform the subsequent operations. If an event related to the termination of the battery heat generation inspecting function, such as a user input signal for terminating an application or an input signal for indicating the termination of the third spectral camera 2120, occurs, the third processor 2150 may determine the event as the termination of the battery heat generation inspecting function and process the termination of the related function.

Meanwhile, although the method of performing the heat generation inspection of the third battery 2050 by using the third battery heat generation inspection apparatus 2100 is described for example, the present invention is not limited thereto. For example, the operations described in FIG. 19 may also be similarly performed in the third server device 2200. If the third server device 2200 is defined to perform the operations described in FIG. 19, the third server device 2200 may be configured to skip steps 2601 and 2603, acquire in step 2605 the current spectral image from the third battery heat generation inspection apparatus 2100 with a communication channel, perform the subsequent operations to determine a good or defective product for the third battery 2050, and transmit the determination result to the third battery heat generation inspection apparatus 2100 or a designated user terminal.

While the description contains many specific implementation details, these should not be construed as limitations on the scope of the present disclosure or of what may be claimed, but rather as descriptions of features that may be specific to particular embodiments of particular disclosure.

Also, although the description describes that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multi-tasking and parallel processing may be advantageous. Also, it should not be construed that the division of various system components are required in all types of implementation. It should be understood that the described program components and systems are generally integrated as a single software product or packaged into a multiple-software product.

The description shows the best mode of the present disclosure and provides examples to illustrate the present disclosure and to enable a person skilled in the art to make and use the present disclosure. The present disclosure is not limited by the specific terms used herein. Based on the above-described embodiments, one of ordinary skill in the art can modify, alter, or change the embodiments without departing from the scope of the present disclosure.

Accordingly, the scope of the present disclosure should not be limited by the described embodiments and should be defined by the appended claims.

### [Reference numerals]

10, 1010, 2010: System environment
50, 1050, 2050: Battery
100, 1100, 2100: Battery heat generation inspection apparatus
110, 1110, 2110: Communication circuit
120, 1120, 2120: Spectral camera
130, 1130, 2130: Memory
140, 1140, 2140: Input unit
150, 1150, 2150: Processor
160, 1160, 2160: Display
180, 1180, 2180: Charging/discharging device
190, 1190, 2190: Sensor unit
200, 1200, 2200: Server device
210, 1210, 2210: Server communication circuit
230, 1230, 2230: Server memory
250, 1250, 2250: Server processor

## Claims

1. A battery heat generation inspection apparatus performing heat generation inspection based on a spectral image, the apparatus comprising:
a spectral camera acquiring the spectral image;
a memory; and
a processor functionally connected to the spectral camera and the memory,
the processor configured to:
collect a current spectral image of a battery being charged or discharged,
perform processing on the current spectral image, perform a good or defective product determination of the battery based on a result of the processing, and
output a result of the good or defective product determination.

2. The apparatus of claim 1, wherein the processor is configured to:
create multimodal data corresponding to the current spectral image by classifying the current spectral image into a plurality of predefined frequency bands,
perform a good or defective product determination of a battery corresponding to the multimodal data based on the current spectral image by applying the multimodal data corresponding to the current spectral image to a reference model pre-stored in the memory and created through supervised learning, and
output a result of the good or defective product determination.

3. The apparatus of claim 2, wherein the processor is configured to:
create multimodal data corresponding to the current spectral image by classifying the current spectral image into spectra of visible light band, ultraviolet band, and infrared band.

4. The apparatus of claim 2, wherein the processor is configured to:
output the determination result on a display or to a designated user terminal.

5. The apparatus of claim 2, wherein in relation to creation of the reference model, the processor is configured to:
collect a plurality of spectral images of a battery being charged or discharged,
create multimodal data corresponding to the plurality of spectral images by classifying each of the plurality of spectral images into a plurality of predefined frequency bands,
perform labeling of a good or defective product of a battery corresponding to the multimodal data corresponding to the plurality of spectral images,
perform learning for creating the reference model by processing the multimodal data corresponding to the plurality of spectral images as input to an artificial neural network and processing the good and defective product labels as outputs of the artificial neural network, and
store the learning-completed reference model in the memory.

6. The apparatus of claim 5, wherein the processor is configured to:
output at least a part of multimodal data corresponding to the plurality of spectral images to a display, receive a user input related to a good or defective product labeling of the battery, and
process a good product labeling or defective product labeling of the multimodal data outputted to the display in response to the user input.

7. The apparatus of claim 5, wherein the processor is configured to:
perform clustering on the plurality of spectral images, and process a good product labeling or defective product labeling for the multimodal data corresponding to the plurality of spectral images by comparing a result of the clustering with a predefined cluster for use in the good product labeling or the defective product labeling.

8. The apparatus of claim 5, wherein the processor is configured to:
divide the multimodal data corresponding to the plurality of spectral images into a learning data set and a validation data set, perform learning of the reference model based on the learning data set, and output a performance validation value by applying the validation data set to the learning-completed reference model.

9. The apparatus of claim 8, wherein the processor is configured to:
terminate the learning of the reference model when the performance validation value is greater than or equal to a predefined specific value, and
when the performance validation value is less than the predefined specific value, collect an additional spectral image, and re-perform the reference model creation based on the collected additional spectral image and the plurality of spectral images.

10. The apparatus of claim 1, wherein the processor is configured to:
extract a first radiomics feature from the current spectral image,
perform a good or defective product determination of a battery corresponding to the current spectral image by applying the first radiomics feature to a reference model pre-stored in the memory and created through supervised learning, and
output a result of the good or defective product determination.

11. The apparatus of claim 10, wherein the first radiomics feature includes at least one of:
a mean value of whole pixel values of the current spectral image, a standard deviation of the whole pixel values, an outlier rate above a threshold value, a skewness of the whole pixel values, a skewness of a pixel mean along a height axis of spectra of the current spectral image, a skewness of a pixel mean along a width axis of spectra of the current spectral image, a skewness of a pixel standard deviation along the height axis, a skewness of a pixel standard deviation along the width axis, a kurtosis of the whole pixel values, a kurtosis of a pixel mean along the height axis, a kurtosis of a pixel mean along the width axis, a kurtosis of a pixel standard deviation along the height axis, and a kurtosis of a pixel standard deviation along the width axis.

12. The apparatus of claim 10, wherein the processor is configured to:
classify a spectrum of an infrared band of the current spectral image, extract second radiomics features from the classified spectrum of the infrared band, and perform a good or defective product determination of a battery corresponding to the current spectral image by applying the second radiomics features to a reference model corresponding to the second radiomics features.

13. The apparatus of claim 10, wherein the processor is configured to:
output the determination result on a display or to a designated user terminal.

14. The apparatus of claim 10, wherein in relation to creation of the reference model, the processor is configured to:
collect a plurality of spectral images of a battery being charged or discharged,
extract radiomics features from each of the plurality of spectral images,
perform labeling of a good or defective product of a battery corresponding to the radiomics features corresponding to the plurality of spectral images,
perform learning for creating the reference model by processing the radiomics features corresponding to the plurality of spectral images as inputs of supervised learning and processing the good and defective product labels as outputs of the supervised learning, and
store the learning-completed reference model in the memory.

15. The apparatus of claim 14, wherein the processor is configured to:
output at least a part of the plurality of spectral images to a display, receive a user input related to a good or defective product labeling of the battery, and
process a good product labeling or defective product labeling of the plurality of spectral images in response to the user input.

16. The apparatus of claim 14, wherein the processor is configured to:
perform clustering on the plurality of spectral images, and process a good product labeling or defective product labeling of the battery corresponding to the plurality of spectral images by comparing a result of the clustering with a predefined cluster for use in the good product labeling or the defective product labeling.

17. The apparatus of claim 14, wherein the processor is configured to:
divide the radiomics features corresponding to the plurality of spectral images into a learning data set and a validation data set, perform learning of the reference model based on the learning data set, and output a performance validation value by applying the validation data set to the learning-completed reference model.

18. The apparatus of claim 17, wherein the processor is configured to:
terminate the learning of the reference model when the performance validation value is greater than or equal to a predefined specific value, and
when the performance validation value is less than the predefined specific value, collect an additional spectral image, and re-perform the reference model creation based on the collected additional spectral image and the plurality of spectral images.

19. The apparatus of claim 10, wherein the processor is configured to:
classify the current spectral image into a plurality of frequency bands, extract second radiomics features from at least some of spectra of the classified frequency bands, and perform a good or defective product determination of a battery corresponding to the current spectral image by applying the second radiomics features to a reference model corresponding to the second radiomics features.

20. The apparatus of claim 19, wherein in relation to creation of the reference model, the processor is configured to:
collect a plurality of spectral images of a battery being charged or discharged,
classify each of the plurality of spectral images by predefined frequency band, and extract radiomics features from spectra classified by the frequency band,
perform labeling of a good or defective product of a battery corresponding to the radiomics features by the frequency band of the plurality of spectral images,
perform learning for creating the reference model by processing the radiomics features corresponding to the plurality of spectral images as inputs of supervised learning and processing the good and defective product labels as outputs of the supervised learning, and
store the learning-completed reference model in the memory.

21. The apparatus of claim 1, wherein the processor is configured to:
perform clustering on the current spectral image,
compare a result of the clustering with a reference model pre-stored in the memory and created by unsupervised learning,
determine the battery corresponding to the current spectral image as a good product when a value of the clustering result is within a normal range designated in the reference model, as a result of the comparison, and
determine the battery corresponding to the current spectral image as a defective product when the clustering result value is out of the normal range designated in the reference model.

22. The apparatus of claim 21, wherein the processor is configured to:
in relation to the unsupervised learning, while performing unsupervised learning on data designated as a good label, set the normal range based on a mean and standard deviation of a restoration error of the data designated as the good label.

23. The apparatus of claim 21, wherein the processor is configured to:
classify the current spectral image into predefined frequency bands,
perform clustering for each of the classified frequency bands, and
perform a good or defective product determination of the battery by comparing each clustering result with corresponding reference models.

24. The apparatus of claim 21, wherein the processor is configured to:
classify the current spectral image into predefined frequency bands,
perform clustering for an infrared band among the classified frequency bands, and
perform a good or defective product determination of the battery by comparing a result of the clustering for the infrared band with a corresponding reference model.

25. The apparatus of claim 21, wherein in relation to creation of the reference model, the processor is configured to:
divide a plurality of spectral images collected in relation to a heat generation of the battery into a learning data set and a validation data set according to a predefined ratio,
complete learning for the reference model by performing unsupervised learning on the learning data set,
perform performance validation by applying the validation data set to the learning-completed reference model, and
output a value of the performance validation.

26. The apparatus of claim 25, wherein the processor is configured to:
perform unsupervised learning by using only data designated as a good product in the learning data set.

27. A server device performing battery heat generation inspection based on a spectral image, the server device comprising:
a server communication circuit forming a communication channel with a battery heat generation inspection apparatus;
a server memory; and
a server processor functionally connected to the server communication circuit and the server memory,
the server processor configured to:
receive, from the battery heat generation inspection apparatus, a current spectral image of a battery being charged or discharged,
perform processing on the current spectral image, perform a good or defective product determination of the battery based on a result of the processing, and
output a result of the good or defective product determination.

28. The server device, wherein the server processor is configured to:
create multimodal data corresponding to the current spectral image by classifying the current spectral image into a plurality of predefined frequency bands, and
perform a good or defective product determination of a battery corresponding to the multimodal data based on the current spectral image by applying the multimodal data corresponding to the current spectral image to a server reference model pre-stored in the server memory and created through supervised learning.

29. The server device of claim 27, wherein the server processor is configured to:
extract a first radiomics feature from the current spectral image,
perform a good or defective product determination of a battery corresponding to the current spectral image by applying the first radiomics feature to a reference model pre-stored in the memory and created through supervised learning.

30. The server device of claim 27, wherein the server processor is configured to:
perform clustering on the current spectral image,
compare a result of the clustering with a reference model pre-stored in the memory and created by unsupervised learning,
determine the battery corresponding to the current spectral image as a good product when a value of the clustering result is within a normal range designated in the reference model, as a result of the comparison, and
determine the battery corresponding to the current spectral image as a defective product when the clustering result value is out of the normal range designated in the reference model.

31. A battery heat generation inspection method based on a spectral image, the method comprising:
by a processor, collecting a current spectral image of a battery being charged or discharged;
by the processor, performing processing on the current spectral image;
by the processor, performing a good or defective product determination of the battery based on a result of the processing; and
outputting a result of the good or defective product determination.

32. The method of claim 31, wherein performing the processing includes:
creating multimodal data corresponding to the current spectral image by classifying the current spectral image into a plurality of predefined frequency bands, and
wherein performing the determination includes:
performing a good or defective product determination of a battery corresponding to the multimodal data based on the current spectral image by applying the multimodal data corresponding to the current spectral image to a reference model created through supervised learning.

33. The method of claim 31, wherein performing the processing includes:
extracting radiomics features from the current spectral image, and
wherein performing the determination includes:
performing a good or defective product determination of a battery corresponding to the current spectral image by applying the radiomics features of the current spectral image to a reference model created through supervised learning.

34. The method of claim 31, wherein performing the processing includes:
performing clustering on the current spectral image; and
comparing a result of the clustering with a reference model pre-stored in a memory of the battery heat generation inspection apparatus and created by unsupervised learning, and
wherein performing the determination includes:
determining the battery corresponding to the current spectral image as a good product when a value of the clustering result is within a normal range designated in the reference model, as a result of the comparison, and determining the battery corresponding to the current spectral image as a defective product when the clustering result value is out of the normal range designated in the reference model.
